# EUROPÄISCHE PATENTSCHRIFT

(11) **EP 4 571 114 B1**
(45) Veröffentlichungstag und Bekanntmachung des Hinweises auf die Patenterteilung: **18.11.2026**
(21) Anmeldenummer: 24218453.9
(22) Anmeldetag: 09.12.2024
(51) Int. Cl.: F04C 18/16, F04C 23/00, F04C 29/04

(54) **KOMPRESSOREINRICHTUNG MIT KÜHLUNG UND VERFAHREN ZUM BETREIBEN EINER KOMPRESSOREINRICHTUNG**
COMPRESSOR DEVICE WITH COOLING AND METHOD FOR OPERATING A COMPRESSOR DEVICE
SYSTÈME DE COMPRESSEUR AVEC REFROIDISSEMENT ET PROCÉDÉ DE FONCTIONNEMENT D'UN SYSTÈME DE COMPRESSEUR

(30) Priorität: 13.12.2023 DE 102023135011
(43) Veröffentlichungstag der Anmeldung: 18.06.2025
(73) Patentinhaber: Kaeser Kompressoren SE, 96450 Coburg (DE)
(72) Erfinder: Simross, Dirk, 96450 Coburg (DE)
(74) Vertreter: Eisenführ Speiser

(56) Entgegenhaltungen:
- JP-A- H09 158 870
- US-A1- 2011 000 227
- US-A1- 2022 163 027

## Beschreibung

Die vorliegende Erfindung betrifft eine Kompressoreinrichtung zum Verdichten eines Gases zum Erzeugen von Druckgas, insbesondere Druckluft, wobei die Kompressoreinrichtung eine Kühleinrichtung aufweist. Außerdem betrifft die vorliegende Erfindung ein Verfahren zum Betreiben eines Kompressoreinrichtung mit einer Kühleinrichtung.

Kompressoren zum Verdichten eines Gases zum Erzeugen von Druckgas können auch als Druckgaskompressoren bezeichnet werden. Sie dienen somit dazu, das Druckgas zu erzeugen, oft nämlich Druckluft. Diese Druckluft, oder anderes Druckgas, ist besonders für eine nachfolgende industrielle Verwendung vorgesehen. Nachfolgende Erläuterungen zu Druckluft betreffen sinngemäß auch andere Druckgase.

Funktionsbedingt entsteht bei dem Erzeugen von Druckluft Wärme. Sowohl die Druckluft als auch der Kompressor, insbesondere sein Gehäuse, werden erwärmt und müssen daher gekühlt werden. Zum Kühlen können Gehäusekühler zum Kühlen eines Gehäuses des Kompressors oder eines Teils davon vorgesehen sein, die oftmals auch als Mantelkühler bezeichnet bzw. ausgeführt sind. Bei ihnen kann ein Kühlmedium, das synonym auch als Kühlmittel bezeichnet werden kann, insbesondere Wasser, durch den Gehäusekühler strömen und dadurch das Gehäuse kühlen. Außerdem kann ein Druckgaskühler vorgesehen sein, der in einem Teil eines Leitungssystems angeordnet ist, das das Druckgas, insbesondere die Druckluft, führt. Hier kann besonders ein Wärmetauscher vorgesehen sein, durch den ebenfalls ein Kühlmedium bzw. Kühlmittel, insbesondere Wasser, fließt. Häufig wird beim Erzeugen des Druckgases auch Öl benötigt, insbesondere zum Schmieren der Komponenten des Kompressors. Solches Öl wird ebenfalls erwärmt und kann durch einen Ölkühler gekühlt werden, der insbesondere einen Wärmetauscher aufweisen kann. Durch diesen Wärmetauscher strömt ebenfalls ein Kühlmedium bzw. Kühlmittel, insbesondere Wasser.

Eine effiziente Kühlung kann dadurch erreicht werden, dass alle genannten Kühler, wobei von den genannten Kühlern jeweils auch mehrere vorgesehen sein können, an einen Primärkühlkreislauf angeschlossen sind. Besonders können die Kühlungen dazu ganz oder teilweise parallelgeschaltet sein, sodass möglichst nicht ein Kühler das bereits erwärmte Wasser eines vorigen Kühlers erhält, was in einer Reihenschaltung erfolgen würde.

Durch die Parallelschaltung erhalten die einzelnen Kühler ihren Kühlwasseranteil je nach Strömungswiderstand ihres Parallelzweiges. Durch entsprechende Auslegung dieser Parallelzweige bzw. der Kühler als solche erhalten die Kühler jeweils eine angemessene Menge an Kühlmittel, also insbesondere Wasser.

Es hat sich aber herausgestellt, dass der Kühlbedarf und damit der Bedarf an Kühlmittel, also Kühlwasser, schwanken kann. Um dem gerecht zu werden, kann der Durchfluss des Kühlmittels im Primärkreislauf entsprechend angepasst werden. Ist die Veränderung des Kühlmittelbedarfs bei den einzelnen Kühlern aber unterschiedlich, so kann es bei optimaler Kühlung in einem Kühler zu zu starker oder zu schwacher Kühlung in einem anderen Kühler kommen.

Um eine solche nicht optimale Kühlung anzupassen, können entsprechende Ventile vorgesehen und angepasst werden, mit denen der jeweilige Kühlmittelzufluss der einzelnen Kühlungen manuell eingestellt werden kann. Eine solche Anpassung kann aber zeitaufwendig sein, weil dazu ein Monteur entsprechende Einstellungen vornehmen bzw. verändern muss. Das Ergebnis hängt auch von den individuellen Fähigkeiten des Monteurs ab.

Als weitere Verbesserung könnte eine individuelle Kühlung vorgesehen werden, bei der jeder Kühler einen eigenen Kühlkreislauf erhält. Eine solche Lösung ist allerdings aufwendig und daher nicht unbedingt zu empfehlen.

Aus dem Dokument WO2022163079A1 ist eine Kühlung für Kompressoren bekannt, bei der u.a. die Menge der Kühlflüssigkeit angepasst werden kann.

Die US 2011/000227 A1 betrifft einen Kompressor sowie einen Ölkühler zum Kühlen des schmierenden Öls. Die US 2022/163027 A1 betrifft ein Kompressorsystem nebst Steuerung. JP H09 158870 A betrifft einen wassergekühlten zweistufigen ölfreien Schraubenkompressor.

Der vorliegenden Erfindung liegt somit die Aufgabe zugrunde, zumindest eines der vorstehend genannten Probleme zu adressieren. Insbesondere soll eine Lösung vorgeschlagen werden, bei der auf einfache Art und Weise eine angepasste Kühlung für eine Kompressoreinrichtung mit Kühleinrichtung geschaffen wird. Zumindest soll zu bisher bekannten Lösungen eine alternative Lösung vorgeschlagen werden.

Erfindungsgemäß wird eine Kompressoreinrichtung nach Anspruch 1 vorgeschlagen.

Somit wird eine Kompressoreinrichtung vorgeschlagen, mit einem Kompressor zum Verdichten eines Gases zum Erzeugen von Druckgas, insbesondere Druckluft, wobei der Kompressor wenigstens eine Verdichterstufe aufweist, und mit einer Kühleinrichtung. Die Kühleinrichtung umfasst einen Ölkühler zum Kühlen von durch den Kompressor erwärmten Öl, wenigstens einen Druckgaskühler zum Kühlen des ganz oder teilweise zum Druckgas verdichteten Gases, und wenigstens einen Gehäusekühler zum Kühlen eines Gehäuses oder eines Teils des Gehäuses des Kompressors. Der Ölkühler, der wenigstens eine Druckgaskühler und der wenigstens eine Gehäusekühler sind jeweils dazu vorbereitet, das Kühlen durch einen Kühlmittelstrom aus einem flüssigen Kühlmittel, insbesondere Wasser, zu erreichen.

Für den wenigstens einen Gehäusekühler ist wenigstens ein Gehäusekühlersteuermittel zum individuellen Steuern des Kühlmittelstroms durch den Gehäusekühler vorgesehen. Außerdem weist die Kompressoreinrichtung eine Kühlsteuerung auf, die dazu eingerichtet ist, das wenigstens eine Gehäusekühlersteuermittel so anzusteuern, dass der wenigstens eine Kühlmittelstrom durch den wenigstens einen Gehäusekühler unabhängig von dem Kühlmittelstrom durch den Ölkühler gesteuert wird.

Somit wird eine Kompressoreinrichtung mit einem Kompressor und einer Kühleinrichtung vorgesehen. Der Kompressor, der auch synonym als Druckgaskompressor bezeichnet werden kann, ist zum Verdichten eines Gases zum Erzeugen von Druckgas vorgesehen. Insbesondere wird ein Druckluftkompressor zum Erzeugen von Druckluft vorgeschlagen. Dieser erzeugt in im Grunde bekannter Art und Weise Druckgas bzw. Druckluft.

Außerdem ist eine Kühleinrichtung vorgesehen, die wenigstens einen Ölkühler, einen Druckgaskühler und einen Gehäusekühler aufweist. Der Ölkühler ist zum Kühlen von durch den Kompressor erwärmtem Öl vorgesehen. Das Öl kann dazu von dem Kompressor durch einen Wärmetauscher fließen, in dem es seine Wärme an ein flüssiges Kühlmittel, insbesondere Wasser, also Kühlwasser, abgibt.

Der Druckgaskühler, von dem auch mehrere vorgesehen sein können, ist zum Kühlen des Druckgases vorgesehen. Das Druckgas strömt dazu durch diesen Druckgaskühler und gibt dabei Wärme an ein flüssiges Kühlmittel ab. Es kommt auch in Betracht, dass ein Kompressor mehrere Verdichtungsstufen aufweist, sodass das Gas nach der ersten Verdichtungsstufe auf einen ersten Drucklevel gebracht wird, was auch schon als Druckgas angesehen werden kann. Insoweit ist das Druckgas aber noch nicht auf den endgültigen Drucklevel komprimiert, sodass von einem teilweise verdichteten Gas ausgegangen werden kann. Aber auch für dieses teilweise verdichtete Gas, das wie gesagt vereinfacht auch als Druckgas bereits bezeichnet werden kann, kann ein Druckgaskühler vorgesehen sein, der in diesem Fall zwischen zwei Verdichterstufen angeordnet sein kann. Liegen wenigstens zwei Verdichterstufen vor, kann nach der zweiten Verdichterstufe wenigstens erneut ein Druckgaskühler vorgesehen sein, der das Druckgas kühlt, was von der genannten zweiten Verdichterstufe abgegeben wird.

Der Gehäusekühler, von dem auch mehrere vorgesehen sein können, ist zum Kühlen eines Gehäuses oder eines Teils des Gehäuses des Kompressors vorgesehen. Als Gehäuse des Kompressors kann hier im Grunde die gesamte körperliche Ausgestaltung des Kompressors, bzw. des Teils davon, angesehen werden. Es geht also nicht nur um ein Gehäuse im Sinne einer Abdeckung des Kompressors, sondern es geht um den Kompressor als körperlichen Gegenstand. Ein Gehäusekühler kann auch Kühlmittelkanäle im Gehäuse einer Verdichterstufe eines Kompressors beinhalten ober bezeichnen.

Zu diesen Kühlern wird somit vorgeschlagen, dass der Ölkühler, der wenigstens eine Druckgaskühler und der wenigstens eine Gehäusekühler jeweils dazu vorbereitet sind, das Kühlen durch einen Kühlmittelstrom aus einem flüssigen Kühlmittel, insbesondere Wasser, zu erreichen. Jeder dieser Kühler weist also wenigstens einen Strömungskanal auf, durch den das Kühlmittel strömen kann. Die genannten Kühler sind also prinzipbedingt Kühler, die zum Kühlen einen Kühlmittelstrom aus einem flüssigen Kühlmittel verwenden, also insbesondere Kühler, die mittels Wasser bzw. Kühlwasser gekühlt werden. Im Betrieb fließt somit durch jeden Kühler ein Kühlmittelstrom.

Für den wenigstens einen Gehäusekühler ist wenigstens ein Gehäusekühlersteuermittel zum individuellen Steuern des Kühlmittelstroms durch den Gehäusekühler vorgesehen, sodass individuell angesteuert werden kann. Seine Steuerung und damit Kühlwirkung kann dadurch von den übrigen Kühlern unabhängig arbeiten.

Dazu weist die Kompressoreinrichtung eine Kühlsteuerung auf, die dazu eingerichtet ist, das wenigstens eine Gehäusekühlersteuermittel so anzusteuern, dass der wenigstens eine Kühlmittelstrom durch den wenigstens einen Gehäusekühler unabhängig von dem Kühlmittelstrom durch den Ölkühler gesteuert wird. Die Kühlsteuerung kann dadurch dazu eingerichtet sein, dass sie als programmierte Steuerung in einem entsprechenden Prozessrechner implementiert ist und der Prozessrechner operativ mit dem wenigstens einen Gehäusekühlersteuermittel verbunden sein. Das Gehäusekühlersteuermittel kann als steuerbares Ventil ausgebildet sein oder ein solches aufweisen. Das Gehäusekühlersteuermittel kann auch eine Pumpe umfassen oder sein, insbesondere eine regelbare. Sie kann mit einem steuerbaren Ventil kombiniert werden.

Besonders ist vorgesehen, dass für jeden Kühlmittelstrom ein individuelles ansteuerbares Steuermittel vorgesehen ist, um jeden Kühlmittelstrom individuell zu steuern, sodass eine Kühlleistung jeweils für den Ölkühler, den wenigstens einen Druckgaskühler und den wenigstens einen Gehäusekühler individuell steuerbar ist. Hierbei kommt auch in Betracht, dass bspw. einer der Kühler, z.B. der Druckgaskühler, zwei oder mehr Teilkühler aufweist, bzw. in zwei oder mehr Teilkühler unterteilt ist, z.B. in einen Zwischenkühler und einen Nachkühler, und beide Teilkühler jeweils über ein Steuermittel steuerbar sind. Für jeden der beiden oder mehreren Teilkühler ist somit ihr jeweiliger Kühlmittelstrom steuerbar. Die Teilkühler sind dazu zueinander parallelgeschaltet. Das individuelle Steuern jeweils eines Kühlmittelstromes durch jeden der Teilkühler kann so ausgestaltet sein, dass zusätzlich, oder ausschließlich, die Verteilung eines Gesamtkühlmittelstroms auf die Teilkühler gesteuert wird.

Es können auch zwei Gehäusekühler, die auch als Mantelkühler bezeichnet werden können, in Reihe oder parallelgeschaltet sein. Sind sie parallelgeschaltet, dann kann das so ausgestaltet sein, dass ein Kühlmittelstrom auf diese beiden Gehäusekühler aufgeteilt wird, wobei für beide Gehäusekühler zusammen nur ein Steuermittel vorgesehen sein kann. Aber auch damit ist ein individuelles Steuern des Kühlmittelstroms durch den Gehäusekühler erreichbar, denn auch in diesem Fall erfolgt die Steuerung unabhängig von den übrigen Kühlern, insbesondere unabhängig vom Ölkühler.

Vorzugsweise wird ein Primärkühlkreislauf für alle Kühler vorgesehen, in dem der oder die Gehäusekühler ganz oder teilweise in einer Parallelschaltung parallel zu anderen Kühlern, insbesondere dem Ölkühler, angeschlossen sind. Das schließt aber nicht aus, dass auch beispielsweise zwei Kühler, zum Beispiel zwei Gehäusekühler, die also als Mantelkühler ausgestaltet sein können, in Reihe geschaltet sind. Solche zwei in Reihe geschalteten Mantelkühler können auch als ein gemeinsamer Gehäusekühler angesehen werden.

Es kann jedes Steuermittel als steuerbares Ventil ausgebildet sein, oder als steuerbare Pumpe, oder manche Steuermittel sind als steuerbares Ventil und andere als steuerbare Pumpe ausgebildet. Jedes Steuermittel kann als individuelles Steuermittel angesehen werden, das individuell angesteuert werden kann. Dadurch ist eine ständige Anpassung des Kühlmittelstroms jedes Kühlers möglich und dadurch kann jeder Kühler in einem für ihn optimalen Betriebspunkt betrieben werden. Es kann also jeder Kühler optimal betrieben werden. Entsteht beispielsweise ein erhöhter Kühlbedarf für den Ölkühler, kann sein Kühlmittelstrom erhöht werden, ohne dass der Kühlmittelstrom der übrigen Kühler auch erhöht wird.

Hier wurde besonders erkannt, dass eine bisher übliche Kopplung von Ölkühler und Mantelkühler nachteilig sein kann, weil an die Kühlung des Gehäuses und an die Kühlung des Öls unterschiedliche Anforderungen gestellt werden, so dass eine Entkopplung vorgeschlagen wird.

Dabei wurde auch erkannt, dass eine optimale Kühlung nicht unbedingt bedeutet, dass möglichst weit heruntergekühlt wird. Das Gehäuse kann sich je nach Temperatur ausdehnen oder zusammenziehen, was Auswirkung auf seine mechanische Funktion haben kann, besonders auf die Größe von Spalten sich relativ zueinander bewegender Elemente. Wichtig ist besonders, dass wenigstens ein Spalt zwischen Verdichtergehäuse und Rotoren und/oder zwischen Rotoren untereinander in einem optimalen Bereich gehalten werden. Eine zu starke Kühlung des Gehäuses führt zu einer Verkleinerung und damit zu einem Kontakt zwischen Rotor und Gehäuse bzw. zwischen Rotoren untereinander, wodurch sich der Spalt dauerhaft vergrößern würde. Bei zu geringer Kühlung des Gehäuses entsteht ein unnötig großer Spalt zwischen Rotor und Gehäuse bzw. zwischen Rotoren untereinander, was zu internen Rückströmungen des bereits verdichteten Gases führen würde.

Für den Ölkühler ist relevant, dass über die Öltemperatur die Ölviskosität in einem optimalen Bereich gehalten wird. Bei zu kaltem Öl steigt die Leistungsaufnahme, bei zu warmem Öl steigt der Verschleiß.

Relevant ist auch die Kühlung der Druckluft nach der letzten Verdichterstufe auf einen optimalen Wert. Bei zu geringer Kühlung kann es zu Schäden an Bauteilen kommen oder die Drucklufttrocknung funktioniert ggf. nicht ausreichend.

Durch die vorgeschlagene Lösung kann eine geringe elektrische Leistungsaufnahme und optimale Druckluftaustrittstemperatur erreicht werden.

Oftmals ist eine hohe Temperatur im Gesamtkühlmittelstrom bzw. Summenkühlmittelstrom wünschenswert. Es soll dann so viel Wärme wie möglich dadurch ins Heizungswasser übertragen werden, das mit dem Gesamtkühlmittelstrom bzw. Summenkühlmittelstrom gekoppelt sein kann oder ihn verwenden kann, um z.B. Brennstoffkosten für die Heizung zu sparen. Hierfür muss jedoch das Temperaturniveau entsprechend angehoben werden, sodass das Kühlwasser für Heizzwecke genutzt werden kann, was für die Kühlung des Kompressors eher negativ sein kann, bei entsprechendem Wärmebedarf jedoch sinnvoll sein kann. Durch die entkoppelte Steuerung der einzelnen Kühler kann beides berücksichtigt werden.

Gemäß einem Aspekt wird vorgeschlagen, dass die Kühlsteuerung dazu eingerichtet ist, das wenigstens eine Gehäusekühlersteuermittel so anzusteuern, dass der wenigstens eine Kühlmittelstrom durch den wenigstens einen Gehäusekühler unabhängig von dem wenigstens einen Kühlmittelstrom durch den wenigstens einen Druckgaskühler gesteuert wird.

Somit ist hier eine weitere Entkopplung des Gehäusekühlers vorgesehen. Dadurch kann der Gehäusekühler noch gezielter auf die Kühlung des Gehäuses abgestimmt sein und insbesondere auf eine optimale Spaltbreite des Spalts zwischen Rotor und Gehäuse ausgerichtet sein.

Gemäß einem Aspekt wird vorgeschlagen, dass die Kühlsteuerung dazu eingerichtet ist, dass nur für den wenigstens einen Gehäusekühler ein Kühlmittelstrom individuell, insbesondere mittels des Gehäusekühlersteuermittels gesteuert wird, während Kühlmittelströme für den Ölkühler und den wenigstens einen Druckgaskühler nicht oder nur über eine gemeinsame Steuerung eines Gesamtkühlmittelstroms gesteuert werden.

Hier wurde besonders erkannt, dass eine gezielte Ansteuerung des Gehäusekühlers und damit eine präzise Kühlung des Gehäuses wichtig ist, wohingegen die übrigen Kühler bzw. die übrigen zu kühlenden Elemente unanfälliger für Temperaturschwankungen sind und daher nur eine Kühlung mit einfacher Steuerung benötigen, oder sogar ungesteuert ausreichend arbeiten. Sie werden dann nur über eine Steuerung des generellen Kühlkreislaufs gesteuert. Der Aufbau des gesamten Kühlsystems kann somit geringgehalten werden, bei gleichzeitig hoher Kühlqualität des Gehäuses. Fehlerquellen werden durch so einen vereinfachten Kühlkreislauf ebenfalls vermieden.

Besonders kann die Gehäusekühlung bzw. Mantelkühlung mit geringerer Temperatur betrieben werden als die Ölkühlung. Die Gehäusekühlung bzw. Mantelkühlung kann dabei unabhängig von der Ölkühlung betrieben werden.

Gemäß einem Aspekt wird vorgeschlagen, dass der Kompressor wenigstens einen Rotor zum Verdichten des Druckgases aufweist und wenigstens ein Kompressorspalt zwischen dem Gehäuse und dem wenigstens einen Rotor oder zwischen zwei Rotoren ausgebildet ist, der eine veränderliche Spaltdicke aufweist, und die Kühlsteuerung dazu eingerichtet ist, das wenigstens eine Gehäusekühlersteuermittel so anzusteuern, dass die Spaltdicke innerhalb eines vorgebbaren Bereichs bleibt, und/oder dass die Spaltdicke einer vorgebbaren Spaltsolldicke nachgeführt wird.

Somit wird die Gehäusekühlung gezielt so gesteuert, dass der Kompressorspalt, der oben auch schon vereinfachend nur als Spalt bezeichnet wurde, möglichst optimal ist. Hier wurde erkannt, dass über die entkoppelte Ansteuerung des Gehäusekühlers die Spaltdicke in für den Betrieb des Kompressors guten Bereichen gehalten werden kann.

Die Spaltdicke kann dazu erfasst werden, oder die Steuerung erfolgt basierend auf Erfahrungswerte, die in Vorversuchen aufgenommen werden können.

Da das Messen der Spaltdicke aber im laufenden Betrieb aufwändig sein kann, zumindest einen zusätzlichen Sensor benötigen würde, kann die Spaltdicke auch über andere Werte gesteuert werden. Besonders kann aus leichter messbaren Temperaturen und basierend auf Erfahrungswerten, auf die Spaltdicke geschlossen werden.

Die Kühlung auf die Spaltdicke auszurichten, ist besonders für trockenverdichtende Kompressoren und/oder Schraubenkompressoren wichtig. Es wird daher vorgeschlagen, dass der Kompressor ein trockenverdichtender Kompressor ist und/oder ein Schraubenverdichter ist. Der Schraubenverdichter ist ein solcher, der dazu ausgebildet ist, das Gas, insbesondere die zu komprimierende Luft, durch eine Bewegung zweier ineinandergreifender Schrauben zu verdichten. Dadurch kann besonders auch ein kontinuierlicher Verdichtungsprozess durchgeführt werden. Als Kompressor kann auch ein Turboverdichter verwendet werden.

Gemäß einem Aspekt wird vorgeschlagen, dass die Kühlsteuerung dazu eingerichtet ist, dass die Spaltdicke des Kompressors erfasst und/oder geschätzt wird und das wenigstens eine Gehäusekühlersteuermittel in Abhängigkeit von der erfassten bzw. geschätzten Spaltdicke gesteuert wird.

Für die Steuerung der Spaltdicke des Kompressorspalts wird gemäß diesem Aspekt somit vorgeschlagen, dass diese Spaltdicke erfasst, insbesondere gemessen wird, und zurückgeführt wird. Die Steuerung wäre dann Teil eines Regelkreises und könnte auch selbst als Regelung bezeichnet werden.

Zum Erfassen kann ein entsprechender Sensor eingesetzt werden. Das ist zwar mit entsprechenden Kosten verbunden, dafür kann die Spaltdicke mit hoher Genauigkeit erfasst werden.

Zum Erfassen der Spaltdicke kommt auch in Betracht, die Spaltdicke mittels eines Zustandsbeobachters zu ermitteln. Der Zustandsbeobachter kann dazu eine Eingangstemperatur eines in eine Verdichterstufe einströmenden zu komprimierenden Gases sowie dessen Volumenstrom als Eingangsgröße verwenden und eine Austrittstemperatur des in der Verdichterstufe zumindest teilweise komprimierten Gases als Ausgangsgröße verwenden. Die Spaltdicke ist dann ein Zustand des Zustandsbeobachters und ein Vergleich zwischen der Austrittstemperatur des Zustandsbeobachters und einer erfassten, korrespondierenden Austrittstemperatur kann zum Abgleichen der Zustände des Zustandsbeobachters bzw. seines Modells dienen. Es kommt auch in Betracht, Zusammenhänge mit einer Modellrechnung nachzubilden und die so berechneten Temperaturen mit den gemessenen Temperaturen zu vergleichen und so auf die Spaltdicke zurückzuschließen.

Gemäß einem Aspekt wird vorgeschlagen, dass wenigstens eine Austrittstemperatur des ganz oder teilweise zu Druckgas komprimierten Gases beim Austreten aus der wenigstens einen Verdichterstufe erfasst wird, ein Vorgabetemperaturwert für die Austrittstemperatur bestimmt wird, bei dem eine optimale Spaltdicke zu erwarten ist, wobei der Vorgabetemperaturwert insbesondere im laufenden Betrieb bestimmt wird, und das wenigstens eine Gehäusekühlersteuermittel so gesteuert wird, dass die Austrittstemperatur dem Vorgabetemperaturwert nachgeführt wird, insbesondere dass die Austrittstemperatur auf den Vorgabetemperaturwert als Solltemperatur ausgeregelt wird.

Hier wurde besonders erkannt, dass die Temperatur des ganz oder teilweise zu Druckgas komprimierten Gases beim Austreten aus der wenigstens einen Verdichterstufe, das hier als Austrittstemperatur bezeichnet wird, eine recht genaue Aussage über die Spaltdicke zulässt. Zusammenhänge zwischen Austrittstemperatur und Spaltdicke können in Vorversuchen aufgenommen werden. Der Vorgabewert kann im Grunde als der Wert gewählt werden, bei dem die optimale Spaltdick zu erwarten ist. Wird also die Austrittstemperatur auf den Vorgabewert ausgeregelt, ist zu erwarten, dass die Spaltdicke etwa ihren optimalen Wert hat.

Es wird somit auch vorgeschlagen, eine Gehäusegröße zu prüfen, bzw. so zu kühlen, dass die Gehäusegröße konstant bleibt. Das ist besonders für die Spaltdicke von Bedeutung und kann auf die Betrachtung der Spaltdicke reduziert sein. Es wurde erkannt, dass es auch möglich ist, die Gehäusegröße bzw. die Spaltdicke indirekt über die Austrittstemperatur zu erfassen. In der Steuerung, die die Kühlung steuert, wird die theoretische Austrittstemperatur bei richtigem Spalt zwischen Rotoren und zwischen Rotoren und Gehäuse mit erfasster Temperatur verglichen, und davon abhängig wird die Kühlung gesteuert. Die theoretische Austrittstemperatur bei richtiger, also optimaler, Spaltdicke zwischen Rotoren und zwischen Rotoren und Gehäuse, kann als die Vorgabetemperatur berücksichtigt werden. Besonders für Schraubenkompressoren, besonders bei den trockenlaufenden, sollte die Spaltdicke besonders genau eingehalten werden. Möglichst sollte die Spaltdicke gegen null µm gehen, insbesondere dauerhaft gegen null µm gehen.

Es wurde aber auch erkannt, dass ein Zusammenhang zwischen optimaler Spaltdicke und Austrittstemperatur von weiteren Größen abhängen kann, besonders von der Außentemperatur und einem Durchsatz komprimierten Druckgases. Daher wird gemäß einem Aspekt vorgeschlagen, den Vorgabewert im laufenden Betrieb zu bestimmen. Insbesondere wird vorgeschlagen, den Vorgabewert in Abhängigkeit von einer in einem Jahresverlauf verfügbaren Kühlmitteltemperatur und/oder einer Luftansaugtemperatur zu bestimmen. Vorzugsweise wird vorgeschlagen, den Vorgabewert in Abhängigkeit von einer Außentemperatur und/oder von einem Durchsatz komprimierten Druckgases zu bestimmen.

Gemäß einem Aspekt wird eine Kompressoreinrichtung vorgeschlagen, die dadurch gekennzeichnet ist, dass die Kühlsteuerung dazu eingerichtet ist, dass das wenigstens eine Gehäusekühlersteuermittel in Abhängigkeit von wenigstens einer Kühlmitteltemperatur gesteuert wird. Dadurch kann die Gehäusekühlung gezielt gesteuert werden, weil besonders die Kühlmitteltemperatur von dem Ergebnis der Kühlung durch die Gehäusekühlung abhängen kann. Es kann daher auch von einer Regelung ausgegangen werden. Vorzugsweise wird für die Kühlmitteltemperatur einen Sollwert vorgegeben. Dadurch kann auch das Kühlmittel auf eine gewünschte Temperatur geregelt werden.

Besonders wird vorgeschlagen, dass die Kühlsteuerung das wenigstens eine Gehäusekühlersteuermittel in Abhängigkeit von einer Temperatur gesteuert wird aus der Liste aufweisend
- eine an einem Kühlmittelausgang des Gehäusekühlers erfasste Kühlmitteltemperatur, und
- eine stromab des Gehäusekühlers erfasste Kühlmitteltemperatur.

Diese Temperaturen spiegeln am besten die Kühlleistung des Gehäusekühlers wider und der Gehäusekühler kann am besten diese Temperaturen beeinflussen.

Gemäß einem Aspekt wird eine Kompressoreinrichtung vorgeschlagen mit einem Kompressor zum Verdichten eines Gases zum Erzeugen von Druckgas, insbesondere Druckluft, und einer Kühleinrichtung. Die Kühleinrichtung umfasst einen Ölkühler zum Kühlen von durch den Kompressor erwärmten Öl, wenigstens einen Druckgaskühler zum Kühlen des ganz oder teilweise zum Druckgas verdichteten Gases, und wenigstens einen Gehäusekühler zum Kühlen eines Gehäuses oder eines Teils des Gehäuses des Kompressors.

Zudem sind der Ölkühler, der wenigstens eine Druckgaskühler und der wenigstens eine Gehäusekühler jeweils dazu vorbereitet, das Kühlen durch einen Kühlmittelstrom aus einem flüssigen Kühlmittel, insbesondere Wasser, zu erreichen. Außerdem sind der Ölkühler und/oder wenigstens einer der Gehäusekühler in Reihe zu wenigstens einem der Druckgaskühler geschaltet, sodass ein Kühlmittelstrom diese in Reihe geschalteten Kühler nacheinander durchströmt.

Somit ist zumindest eine teilweise Reihenschaltung mehrerer unterschiedlicher Kühler vorgesehen. Besonders die Reihenschaltung von Ölkühler und Druckgaskühler wird vorgeschlagen. Durch die Reihenschaltung kann erreicht werden, dass das Kühlmittel eine hohe Rücklauftemperatur erhält, sodass eine höhere Wasseraustrittstemperatur im Gesamtkühlmittelstrom erreicht werden kann. Dadurch kann die anfallende Abwärme besser genutzt werden. Gleichzeitig können die Mantelkühlung und der Ölkühler auch bei hoher Wassereintrittstemperatur ausreichend gekühlt werden.

Bei der vorgeschlagenen Reihenschaltung können dennoch Ölkühler und Gehäusekühler zueinander parallelgeschaltet werden, sodass weiterhin gewährleistet bleibt, dass der Gehäusekühler unabhängig vom Ölkühler gesteuert werden kann.

Gemäß einem Aspekt wird vorgeschlagen, dass der diese in Reihe geschalteten Kühler durchströmende Kühlmittelstrom zuerst den Ölkühler durchströmt, und anschließend den wenigstens einen Druckgaskühler durchströmt, sodass der Ölkühler mit einem Kühlmittel mit geringerer Temperatur durchströmt wird, als der wenigstens eine Druckgaskühler.

Besonders durch diese Reihenfolge kann dadurch eine hohe Austrittstemperatur erreicht werden, da das Kühlmittel in dem Druckgaskühler noch auf eine Temperatur angehoben wird, die durch den Ölkühler nicht erreichbar wäre.

Gemäß einem Aspekt wird vorgeschlagen, dass ein Kühlkreislauf vorgesehen ist, zum Bereitstellen des Kühlmittels an einem Kühlkreislaufeinlass und zum Zurücknehmen des durch die Kühler erwärmten Kühlmittels an einem Kühlkreislaufauslass, um das erwärmte Kühlmittel zurückzukühlen oder einer weiteren Verwendung zuzuführen, insbesondere um Wärme des Kühlmittels zu verwenden, und dass die Kompressoreinrichtung eine Kühlsteuerung aufweist. Die Kühlsteuerung ist dazu eingerichtet, die Kompressoreinrichtung so zu steuern, dass das Kühlmittel am Kühlkreislaufauslass eine Temperatur von 85-95°C, insbesondere 90°C bis 95°C aufweist.

Dafür kann in der Kühlsteuerung ein entsprechendes Steuerprogramm implementiert sein, das entsprechende Verfahrensschritte ausführt. Zudem ist eine solche Kühlsteuerung mit entsprechenden Steuermitteln der Kühler, insbesondere Ventile, verbunden, damit die Steuermittel von der Kühlsteuerung angesteuert werden können. Auch eine Verbindung zu wenigstens einer Pumpe zum Treiben eines Gesamtkühlmittelstroms kann vorgesehen sein.

Zum Steuern der Temperatur des Kühlmittels am Kühlkreislaufauslass kann diese gemessen und zurückgeführt werden, sodass die Kühlsteuerung in einen Regelkreis eingebunden sein kann oder eine Regelung bildet.

Die Temperatur von 85-95°C, insbesondere 90°C bis 95°C kann als hohe Temperatur angesehen werden und weitere Verweise, auch zu anderen Aspekten, auf hohe Temperaturen können durch diese Temperaturwerte spezifiziert werden. Besonderes wurde erkannt, dass die Temperatur mit 95°C hoch ist, aber noch unter der Temperatur von kochendem Wasser unter atmosphärischem Druck. Ebenfalls kann eine Grenze von 110°C eingehalten werden, die evtl. relevanter ist, da in einer Kompressoreinrichtung das Kühlwasser in der Regel unter Druck steht, sodass es erst bei höherer Temperatur verdampft. Zudem ist zu beachten, dass ab 110°C andere Vorschriften gelten können. Die genannten Temperaturen sind somit besonders für Kühlwasser als Kühlmittel vorgesehen.

Gemäß einem Aspekt wird vorgeschlagen, dass die Kompressoreinrichtung so aufgebaut ist, dass das Kühlmittel erst durch den Ölkühler strömt, und anschließend durch wenigstens einen des wenigstens einen Gehäusekühlers strömt.

Das Kühlmittel kann daher erst im Ölkühler erwärmt und anschließend im Gehäusekühler noch weiter erwärmt werden, um dadurch eine hohe Temperatur des Kühlmittels am Kühlkreislaufauslass zu erreichen.

Der Gehäusekühler kann aus mehreren Gehäusekühlern bestehen, die zueinander parallel oder in Reihe geschaltet sein können. Das weitere Erwärmen des Kühlmittels im Gehäusekühler kann in beiden Varianten erfolgen und den beschriebenen Effekt erreichen.

Gemäß einem Aspekt wird vorgeschlagen, dass mehrere Druckgaskühler vorgesehen sind und die Kompressoreinrichtung so aufgebaut ist, dass das Kühlmittel, nachdem es den Ölkühler durchströmt hat, die mehreren Druckgaskühler durchströmt, die insbesondere parallelgeschaltet sind, sodass das Kühlmittel diese mehreren Druckgaskühler parallel durchströmt.

Somit erwärmen die Druckgaskühler das Kühlmittel weiter, nachdem es im Ölkühler bereits erwärmt wurde. Durch die Parallelschaltung der Druckgaskühler, die jeweils als Wärmetauscher ausgebildet sein können bzw. Wärmetauscher enthalten können, kann erreicht werden, dass beide Wärmetauscher die gleiche kühle Wassereintrittstemperatur bekommen und im Gegenstrom, also im Druckgasstrom, der den jeweiligen Wärmetauscher durchströmt, die Druckluft bis nahe an die Wassereintrittstemperatur kühlen können.

Da die Drucklufteintrittstemperatur typischerweise deutlich über 100°C liegt, besonders im Bereich von etwa 120°C bis 250°C, kann mit beiden Druckgaskühlern das Wasser, also das Kühlwasser, bei Bedarf auf die gewünschte Temperatur erwärmt werden.

Gemäß einem Aspekt ist eine Kompressoreinrichtung dadurch gekennzeichnet, dass mehrere bzw. die mehreren Druckgaskühler in mehrere Druckgaskühlergruppen aufgeteilt sind, wobei Druckgaskühler in jeweils einer Druckgaskühlergruppe zueinander parallelgeschaltet sind, und die Druckgaskühlergruppen zueinander in Reihe geschaltet sind. Dazu kann besonders vorgesehen sein, dass ein erster und ein zweiter Druckgaskühler zueinander parallelgeschaltet sind und zu einem dritten und vierten Druckgaskühler, die zueinander parallelgeschaltet sind, in Reihe geschaltet sind.

Somit kann erreicht werden, dass die Druckgaskühler, die insbesondere als Wärmetauscher ausgebildet sind, was für alle Druckgaskühler aller Aspekte vorgesehen sein kann, in einer Parallelschaltung das Kühlmittel mit gleicher Wassereintrittstemperatur erhalten. Im Gegenstrom können sie die Druckluft bis nahe an die Wassereintrittstemperatur kühlen.

Dabei erwärmen Druckgaskühler einer späteren oder zweiten Druckgaskühlergruppe das Kühlmittel weiter, nachdem es in den Druckgaskühlern der ersten Druckgaskühlergruppe bereits erwärmt wurde.

Erfindungsgemäß wird zudem ein Verfahren zum Steuern einer Kompressoreinrichtung vorgeschlagen, wobei die Kompressoreinrichtung einen Kompressor, insbesondere Schraubenkompressor, zum Verdichten eines Gases zum Erzeugen von Druckgas, insbesondere Druckluft hat, wobei der Kompressor wenigstens eine Verdichterstufe aufweist. Die Kompressoreinrichtung weist auch eine Kühleinrichtung auf. Die Kühleinrichtung umfasst einen Ölkühler zum Kühlen von durch den Kompressor erwärmten Öl, wenigstens einen Druckgaskühler zum Kühlen des ganz oder teilweise zum Druckgas verdichteten Gases, und wenigstens einen Gehäusekühler zum Kühlen eines Gehäuses oder eines Teils des Gehäuses des Kompressors.

Der Ölkühler, der wenigstens eine Druckgaskühler und der wenigstens eine Gehäusekühler sind jeweils dazu vorbereitet, das Kühlen durch einen Kühlmittelstrom aus einem flüssigen Kühlmittel, insbesondere Wasser, zu erreichen. Für den wenigstens einen Gehäusekühler ist wenigstens ein Gehäusekühlersteuermittel zum individuellen Steuern des Kühlmittelstroms durch den Gehäusekühler vorgesehen, und die Kompressoreinrichtung weist eine Kühlsteuerung auf. Die Kühlsteuerung steuert das wenigstens eine Gehäusekühlersteuermittel so an, dass der wenigstens eine Kühlmittelstrom durch den wenigstens einen Gehäusekühler unabhängig von dem Kühlmittelstrom durch den Ölkühler gesteuert wird.

Insbesondere wird vorgeschlagen, dass das Verfahren so arbeitet, wie im Zusammenhang mit der Kompressoreinrichtung beschrieben wurde. Besonders arbeitet das Verfahren so, wie für die Kompressoreinrichtung oder entsprechende Steuerung beschrieben wurde, die jeweils dazu eingerichtet sind, ein entsprechendes Verfahren oder Verfahrensschritte auszuführen. Besonders werden die folgenden Verfahren oder Verfahrensteile vorgeschlagen, deren Umsetzung und vorteilhafte Wirkungen auch vorstehend im Zusammenhang mit Aspekten zur Kompressoreinrichtung beschrieben wurden.

Gemäß einem Aspekt wird ein Verfahren vorgeschlagen, das die Kühlsteuerung nur für den wenigstens einen Gehäusekühler einen Kühlmittelstrom individuell, insbesondere mittels des Gehäusekühlersteuermittels steuert, während Kühlmittelströme für den Ölkühler und den wenigstens einen Druckgaskühler nicht oder nur über eine gemeinsame Steuerung eines Gesamtkühlmittelstroms gesteuert werden.

Gemäß einem Aspekt wird vorgeschlagen, dass der Kompressor wenigstens einen Rotor zum Verdichten des Druckgases aufweist und wenigstens ein Kompressorspalt zwischen dem Gehäuse und dem wenigstens einen Rotor ausgebildet ist, der eine veränderliche Spaltdicke aufweist, und die Kühlsteuerung das wenigstens eine Gehäusekühlersteuermittel so ansteuert, dass die Spaltdicke innerhalb eines vorgebbaren Bereichs bleibt, und/oder dass die Spaltdicke einer vorgebbaren Spaltsolldicke nachgeführt wird.

Gemäß einem Aspekt wird vorgeschlagen, dass unter Verwendung der Kühlsteuerung die Spaltdicke des Kompressors erfasst und/oder geschätzt wird und das wenigstens eine Gehäusekühlersteuermittel in Abhängigkeit von der erfassten bzw. geschätzten Spaltdicke gesteuert wird.

Gemäß einem Aspekt wird vorgeschlagen, dass unter Verwendung der Kühlsteuerung wenigstens eine Austrittstemperatur des ganz oder teilweise zu Druckgas komprimierten Gases beim Austreten aus der wenigstens einen Verdichterstufe erfasst wird, ein Vorgabetemperaturwert für die Austrittstemperatur bestimmt wird, bei dem eine optimale Spaltdicke zu erwarten ist, wobei der Vorgabetemperaturwert insbesondere im laufenden Betrieb bestimmt wird, und das wenigstens eine Gehäusekühlersteuermittel so gesteuert wird, dass die Austrittstemperatur dem Vorgabetemperaturwert nachgeführt wird, insbesondere dass die Austrittstemperatur auf den Vorgabetemperaturwert als Solltemperatur ausgeregelt wird.

Nachfolgend wird die Erfindung anhand von Ausführungsformen unter Bezugnahme auf die begleitenden Figuren exemplarisch näher erläutert.
- Fig. 1: zeigt eine Kompressoreinrichtung gemäß dem Stand der Technik in einer schematischen Darstellung,
- Fig. 2 und 3: zeigen jeweils eine Kompressoreinrichtung jeweils gemäß einer Ausführungsform der Erfindung in einer schematischen Darstellung.
- Fig. 4: zeigt einen Kompressor mit zwei Verdichterstufen in einer schematischen, teilweise geschnittenen Darstellung.
- Fig. 5: zeigt eine erste Verdichterstufe des Kompressors der Figur 4 in einer vergrößerten Darstellung.

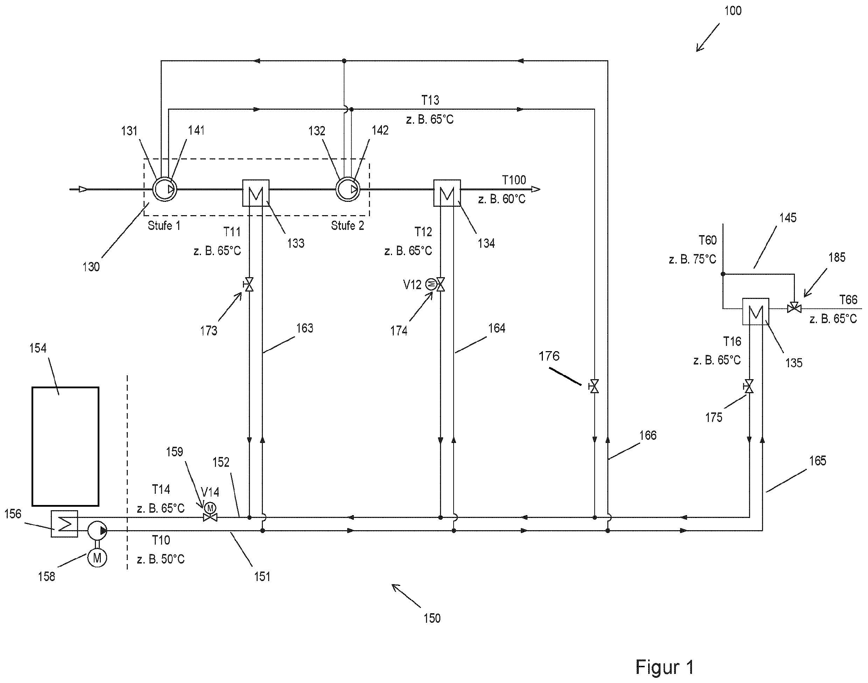

Fig. 1 zeigt eine Kompressoreinrichtung 100 mit einem Kompressor 130 mit einer ersten und zweiten Verdichterstufe 131 bzw. 132. Der Kompressor 130 und auch die übrigen Elemente sind schematisch dargestellt.

Weiterhin ist ein Zwischenkühler 133 und ein Nachkühler 134 vorgesehen, die auch als Druckluftzwischenkühler bzw. Druckluftnachkühler bezeichnet werden können. Der Zwischenkühler ist hier als Teil des Kompressors 130 dargestellt, da er zwischen der ersten und zweiten Verdichterstufe angeordnet ist, er kann aber auch als separates Element ausgebildet sein. Entsprechend kann der Nachkühler 134, der nicht als Teil des Kompressors 130 dargestellt ist, in einer anderen Ausgestaltung Teil des Kompressors sein.

Zur Kühlung der ersten und zweiten Verdichterstufe 131, 132 ist eine erste bzw. zweite Mantelkühlung 141 bzw. 142 vorgesehen. Die Mantelkühlungen 141 und 142 sind jeweils in die Verdichterstufe 131 bzw. 132 integriert.

Außerdem ist ein Ölkühler 135 vorgesehen. Der Ölkühler 135 ist mit einem Ölkreislauf 145 des Kompressors 130 verbunden. Der besseren Übersichtlichkeit halber ist die Verbindung zwischen Ölkreislauf 145 und Kompressor 130 in der Figur, und im Übrigen auch in den meisten anderen Figuren, nicht dargestellt.

Zur Kühlung der Kompressoreinrichtung 100 insgesamt ist ein Primärkühlkreislauf 150 vorgesehen mit einem Kühlmittelzulauf 151 und einem Kühlmittelrücklauf 152. Die genannten Kühler, nämlich der Zwischenkühler 133, der Nachkühler 134, der erste und zweite Mantelkühler 141, 142 und der Ölkühler 135, werden über diesen Primärkühlkreislauf mit kaltem Kühlmittel, im veranschaulichten Beispiel nämlich Wasser, versorgt, nämlich über den Kühlmittelzulauf 151. Das so durch die Kühler erwärmte Wasser strömt über den Kühlmittelrücklauf 152 zurück in eine Wärmesenke 154, die nur abstrakt angedeutet ist. Die Wärmesenke 154 kann, muss aber nicht mehr Bestandteil der Kompressoreinrichtung 100 sein. In der Wärmesenke bzw. als Wärmesenke ist ein Primärwärmetauscher 156 vorgesehen und ein gemeinsamer Kühlmittelstrom in dem Primärkühlkreislauf 150 kann durch eine Primärkühlmittelpumpe 158 erreicht werden.

Die genannten Kühler, nämlich der Zwischenkühler 133, der Nachkühler 134, erster und zweiter Mantelkühler 141, 142 und der Ölkühler 135 sind im Primärkühlkreislauf parallelgeschaltet. Damit werden all die genannten Kühler durch Kühlmittel von dem Primärkühlkreislauf 150 versorgt. Die jeweiligen Kühler sind dazu an den Primärkühlkreislauf parallel angeschlossen über einen Zwischenkühlerstrang 163, einen Nachkühlerstrang 164, einen Mantelkühlerstrang 166, bzw. einen Ölkühlerstrang 165.

Der Mantelkühlerstrang 166 versorgt somit zunächst den ersten und zweiten Mantelkühler 141, 142. In dem Beispiel gemäß der Fig. 1 sind dabei der erste und zweite Mantelkühler 141, 142 parallelgeschaltet.

Zum Einstellen der Kühlmittelströme bzw. ihrer Verhältnisse zueinander sind manuell einstellbare Ventile vorgesehen, nämlich ein manuelles Zwischenkühlerventil 173, ein manuelles Mantelkühlerventil 176 und ein manuelles Ölkühlerventil 175. Um den Zwischenkühler 133 und den Nachkühler 134 besser aufeinander abstimmen zu können, ist ein Nachkühlerstellventil 174 vorgesehen.

Ferner ist ein Primärstellventil 159 vorgesehen, das den Rücklauf des Gesamtkühlmittels im Kühlmittelrücklauf steuern kann.

Außerdem ist noch ein Öl-Bypass-Ventil 185 vorgesehen, mit dem der Strom des Öls durch den Ölkühler 135 gesteuert werden kann.

Fig. 1 zeigt somit ein funktionierendes Kühlkonzept, zu dem aber noch Verbesserungen erkannt wurden. Besonders hat sich herausgestellt, dass die einzelnen Kühler zumindest teilweise nicht gut aufeinander abgestimmt sind und zueinander unterschiedlich stark kühlen. Es wurde erkannt, dass hier ein Bedarf an Verbesserungen besteht, um eine gute, gleichmäßige und damit effiziente Kühlung für die Kompressoreinrichtung 100 zu erzielen. Ebenfalls wurde erkannt, dass ein Bedarf angepasster Kühlung für jeden Kühler besteht, der auch vom Betriebszustand der Kompressoreinrichtung, insbesondere ihrer Kühleinrichtung, abhängen kann. Besonders kann ein Bedarf angepasster Kühlung abhängig sein vom Enddruck, abhängig von der Drehzahl, abhängig von der Ansaugtemperatur, abhängig von der Kühlwassereintrittstemperatur T10, abhängig von einer gewünschten Kühlwasseraustrittstemperatur bei der Temperaturmessstelle T14. Insbesondere kann er abhängig sein von einer Druckluftaustrittstemperatur T100, und abhängig von einer gewünschten Öltemperatur T60 oder T66.

Es ist zu bemerken, dass die Kompressoreinrichtung 100 somit aus dem Kompressor 130 und den vielen genannten Kühlern und auch einschließlich dem Primärkühlkreislauf besteht, wobei die genannten Kühler einschließlich dem genannten Primärkühlreislauf (gegebenenfalls weiterer Sekundärkühlkreislauf) als Kühleinrichtung der Kompressoreinrichtung verstanden werden können.

Es ergeben sich besonders folgende Nachteile:
Die Aufteilung der Wasservolumenströme auf die parallelen Kühler musste manuell eingestellt werden, aber die Aufteilung der Wärmeleistungen und damit die Wassertemperaturen können abhängig vom Betriebspunkt deutlich schwanken.

Bei höherer gewünschter Austrittstemperatur an der Temperaturmessstelle T14 müssen der Ölkühler und die Mantelkühlung separat mit Kühlwasser gekühlt werden, was über ein sekundäres Kühlsystem erfolgen kann.

Aufgrund von diversen Störgrößen kann es deutliche Abweichungen zwischen den einzelnen Austrittstemperaturen T11, T12, T13, T16 geben.

Meist resultiert eine ineffektive Nutzung des Kühlwassers. Stufenbeschädigungen durch zu kaltes Kühlwasser sind möglich.

Ebenfalls wurde Folgendes als nachteilig festgestellt.

Die Wasseraustrittstemperatur wurde über ein gemeinsames Ventil V14 geregelt.

Die Öltemperatur wurde über einen Bypass zum Ölkühler geregelt. Der Ölkühler bekam meist unnötig viel Wasser, damit er auch im ungünstigsten Fall noch ausreichend kühlen kann.

Der Nachkühler bekam meist unnötig viel Wasser, damit er auch im ungünstigsten Fall noch ausreichend kühlen kann. Über das Ventil V12 wurden nur die Temperaturen T11 = T12 abgeglichen, um unterschiedliche Wärmeleistungen im Nachkühler kompensieren zu können.

Die Mantelkühlung bekommt meist zu wenig Wasser, um die gewünschte Austrittstemperatur T14 erreichen zu können - Manchmal aber auch zu viel und zu kaltes Wasser, was zu Schäden an den Stufen führen kann.

Zwischenkühlung bekommt nur ausreichend Wasser, um die gewünschte gemischte Austrittstemperatur T14 erreichen zu können.

Falls eine Komponente zeitweise eine bessere Kühlung benötigt, öffnet V14 weiter, sodass alle Wärmetauscher mehr Wasser bekommen, aber die gewünschte Wasseraustrittstemperatur T14 nicht mehr erreicht wird.

In Fig. 1 ist besonders auch zu erkennen, dass der Ölkühler 135, die Mantelkühler 141 und 142, die auch als Gehäusekühler bezeichnet werden können, sowie die Druckgaskühler, nämlich der Zwischenkühler 133 und der Nachkühler 134 alle parallel zueinander geschaltet sind. Zum Kühlen hat sich dieser Aufbau bewährt, aber die genannten Kühler erhalten durch die Parallelschaltung immer kühles Kühlmittel, das in dem jeweiligen Kühler nicht auf sehr hohe Temperaturen erhöht werden kann, wodurch die Temperatur am Austritt zum Wärmetauscher des Primärkühlkreislaufs 150 nicht sehr hoch werden kann. Sie kann als typischen Wert bspw. etwa 65°C erreichen. Damit ist eine Verwendung der Abwärme nicht sehr gut möglich.

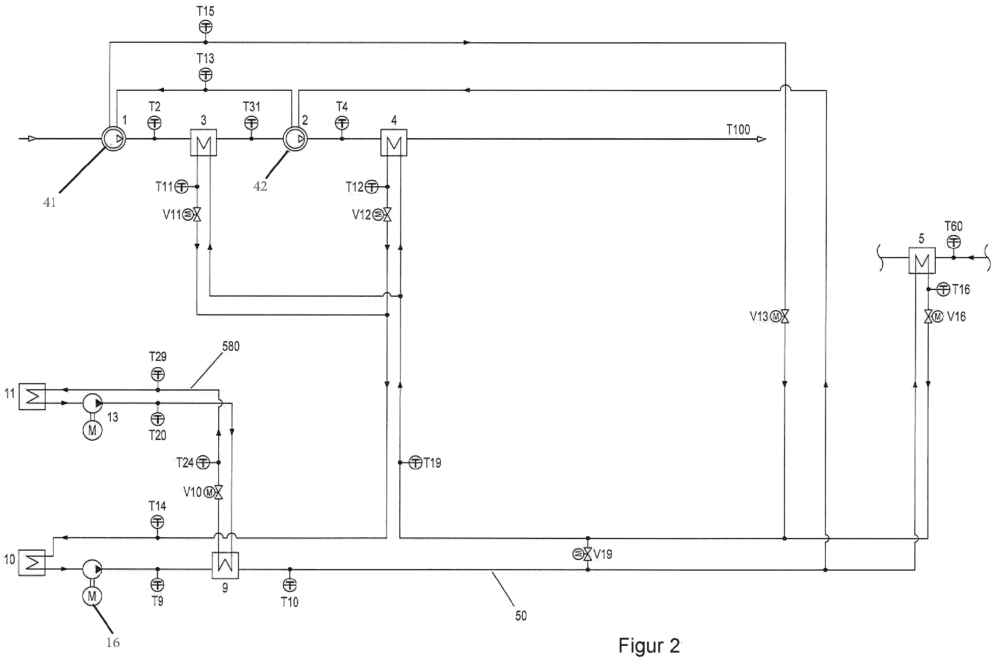

Fig. 2 zeigt eine Kompressoreinrichtung 300 gemäß einer Ausgestaltung. Diese Kompressoreinrichtung 300 weist ganz ähnlich zu der Kompressoreinrichtung 100 der Fig. 1 einen Kompressor 30 mit einer ersten und zweiten Verdichterstufe 1, 2 mit einem ersten und zweiten Mantelkühler 41, 42 auf. Der erste und zweite Mantelkühler 41, 42 sind in der gezeigten Ausführungsform zueinander in Reihe geschaltet.

Außerdem sind ein Zwischenkühler 3 und ein Nachkühler 4 vorgesehen, die jeweils Druckgas kühlen. Der Zwischenkühler 3 kühlt dabei ein teilweise verdichtetes Druckgas, während der Nachkühler 4 das vollständig verdichtete Druckgas kühlt.

Ebenfalls ist ein Ölkühler 5 vorgesehen, der Öl kühlt, das den Kompressor 30 durchströmt.

All die genannten Kühler 3, 4, 5, 41 und 42 sind an einen Primärkühlkreislauf 50 angeschlossen, der sie somit mit Kühlmittel versorgt. Zum Betreiben des Primärkühlkreislaufs sind - ähnlich wie auch in Fig. 1 gezeigt - ein Primärwärmetauscher 10 und eine Primärkühlmittelpumpe 12 vorgesehen. Der Primärwärmetauscher 10 und/oder die Primärkühlmittelpumpe 12 können jeweils einen Teil der Kompressoreinrichtung bilden, oder auch nicht.

Jedes der an den Primärkühlkreislauf 50 angeschlossenen Kühlelemente kann über ein eigenes, nämlich individuelles Steuermittel nichtmanuell, insbesondere über ansteuerbare Steuermittel, gesteuert werden kann. Dazu sind jeweils Stellventile V11, V12, V13 und V16 vorgesehen, die jeweils in einem zum Primärkühlkreislauf parallelgeschalteten Kühlmittelstrang angeordnet sind, um einen Kühlmittelstrom durch das jeweilige Kühlelement zu steuern. Stellventile können, in dieser und allen anderen Ausführungsformen, vereinfachend als Ventile bezeichnet werden. Der erste und zweite Mantelkühler 41 und 42 können über das Stellventil V13 angesteuert werden. Alternativ wären auch separate Ventile möglich, wenn der erste und zweite Mantelkühler 41 und 42 parallel zueinander geschaltet wären.

Die genannten Kühlelemente, also Zwischenkühler 3, Nachkühler 4, Ölkühler 5 und der erste und zweite Mantelkühler 41 und 42, können somit individuell angesteuert werden. Besonders können die Mantelkühler 41 und 42 über das Ventil V13 von dem Ölkühler unabhängig gesteuert werden.

Besonders ist vorgesehen, zur Steuerung der jeweiligen Kühlelemente bzw. dazu zum Steuern der Stellventile V11 bis V13 und V16 auch Temperaturen des Kühlmittels, also des Kühlwassers, zu erfassen und zu berücksichtigen. Dafür sind entsprechende Temperaturmessstellen T2, T31, T4 und T9 bis T16, T19, T20, T29 und T60 vorgesehen. Die Kühlungen können dadurch in Abhängigkeit von diesen Temperaturen gesteuert werden.

Besonders kann eine Steuerung der ersten und/oder zweiten Mantelkühlung in Abhängigkeit von einer Austrittstemperatur des Druckgases beim Austritt aus der ersten und/oder zweiten Verdichterstufe 1 bzw. 2 gesteuert werden, also in Abhängigkeit von der an der Temperaturmessstelle T2 bzw. T4 erfassten Temperatur des Druckgases. Die Mantelkühlungen 41 bzw. 42 können dazu gemeinsam über das Ventil V13 gesteuert werden, oder individuell, wenn sie zueinander parallelgeschaltet sind. Das Ventil V13, oder bei Parallelschaltung zwei entsprechende Ventile, können als Gehäusekühlersteuermittel bezeichnet werden. Darüber kann die Gehäusekühlung unabhängig von dem Ölkühler gesteuert werden. Dadurch ist die gezielte temperaturabhängige Steuerung der Mantelkühlung möglich. Dies ermöglicht, die Steuerung der Mantelkühlung gezielt darauf auszurichten, eine Spaltdicke zwischen Rotoren oder Rotor und Gehäuse zu steuern.

Der Ölkühler kann seinerseits durch das Ventil V16 gesteuert werden, unabhängig von der Gehäusekühlung.

Mit der Temperaturmessstelle T60 wird eine Öltemperatur erfasst. Es können auch weitere Temperaturen erfasst werden, wie eine Austrittstemperatur T100 als Austrittstemperatur aus der Kompressoreinrichtung.

Vorzugsweise können alle diese Temperaturen in die Steuerung der Kühlung und damit Steuerung der Stellventile V10 bis V13, V16 und V19 einbezogen werden. Es ist aber nicht erforderlich, dass alle Temperaturen berücksichtigt werden. Vorzugsweise wird zumindest eine Temperatur berücksichtigt.

Die Kompressoreinrichtung gemäß Figur 2 hat somit einen Druckluft-Zwischenkühler 3, einen Druckluft-Nachkühler 4, Ölkühler 5 sowie Verdichterstufen 1, 2 mit Mantelkühlung 41, 42.

Bei diesem Ausführungsbeispiel gibt es einen Kühlwasserkreislauf 50, der einen Wärmetauscher 10, z.B. für die Wärmerückgewinnung, aufweist. Der Wärmetauscher 10 kann zur Abwärmenutzung verwendet werden, es kann aber auch ein Kühlsystem verwendet werden, das nicht zur Abwärmenutzung verwendet wird. In Kombination mit einer Abwärmenutzung ist der Nutzen jedoch besonders groß.

Ergänzend ist ein Sekundärkühlkreislauf 580 vorgesehen, der zum Kühlen des Gesamtkühlmittelstroms des Primärkühlkreislaufs 50 vorgesehen ist. Dazu ist eine Verknüpfung über den Primär-Sekundär-Wärmetauscher 9 vorgesehen.

Der Sekundärkühlkreislauf 580 kann über einen Sekundärwärmetauscher 11 Wärme wieder abgeben und sein Kühlmittelstrom kann über eine Sekundärkühlmittelpumpe 13 angetrieben werden.

Der Sekundärkühlkreislauf 580 kann einen Kühlmittelstrom, insbesondere Gesamtkühlmittelstrom, des Primärkühlkreislaufs kühlen, und dazu ist der Primär-Sekundär-Wärmetauscher 9 vorgesehen. Zur Ansteuerung ist zudem das Stellventil V10 vorgesehen, das somit in einem Kühlmittelstrang des Primär-Sekundär-Wärmetauschers 9 angeordnet ist. Die Ansteuerung des Stellventils V10 kann in Abhängigkeit von einer Nachlauftemperatur des Kühlmittels, das den Primär-Sekundär-Wärmetauscher 9 verlässt, erfolgen. Dafür ist eine Temperaturmessstelle T10 vorgesehen. Die Temperatur des Kühlmittels, das durch das Stellventil V10 strömt, kann an der Temperaturmessstelle T24 erfasst werden.

Der Wärmetauscher 9 wird verwendet, wenn die Wassereintrittstemperatur T9 in den Kompressor zu hoch ist, so dass die Wärmetauscher den Kompressor, z.B. das Öl nicht ausreichend kühlen können. Dann kann das einströmende Wasser über den Wärmetauscher 9 auf eine gewünschte, ausreichend geringe Temperatur T10 gekühlt werden.

Eine ähnliche Situation ergibt sich, wenn im Primärwärmetauscher 10 weniger oder keine Wärme benötigt wird, dann kann die Temperatur T9 annähernd die Temperatur T14 erreichen. Da die Aufnahmeleistung des Kompressors sinkt, je tiefer die Temperatur T31 ist und wenn die Temperatur T13 (s. Figur 2) ausreichend oder sogar optimal gering ist, wird versucht, bei geringem Wärmebedarf die Temperatur T10 so gering wie möglich zu halten.

Der Wärmetauscher 9 wird besonders für den Fall vorgeschlagen, wenn die Wassereintrittstemperatur an der Temperaturmessstelle T9 in dem Kompressor zu hoch ist, so dass die Wärmetauscher den Kompressor, z.B. das Öl nicht ausreichend kühlen können. Dann kann das einströmende Wasser über den Wärmetauscher 9 auf eine gewünschte, ausreichend geringe Temperatur T10 gekühlt werden.

Eine ähnliche Situation ergibt sich, wenn im Wärmetauscher 10 weniger oder keine Wärme benötigt wird, dann kann die Temperatur bei T9 annähernd die Temperatur bei T14 erreichen. Da die Aufnahmeleistung des Kompressors sinkt, je tiefer die Temperatur bei T31 ist, und wenn die Temperatur bei T13 ausreichend/optimal gering ist, wird versucht, bei geringem Wärmebedarf die Temperatur bei T10 so gering wie möglich zu halten.

Über die vier Regelventile V11, V12, V13 und V16 kann der Wasser-Volumenstrom durch die Komponenten 3, 4, 5, 1, 2 bzw. 41, 42 individuell und optimiert eigestellt werden.

Eine Regelung der (gemischten) Wasseraustrittstemperatur T14 des Kompressors ist über die o.g. Ventile V11, V12, V13, V16 möglich.

Besonders wird vorgeschlagen, dass die Temperaturen nach der ersten und zweiten Verdichterstufe, somit gemäß den Figuren an den Messstellen T11 und T12 einbezogen werden, um Dampfblasenbildung und damit verbundene Gefahren auszuschließen.

Es wird vorgeschlagen, mindestens eine Öltemperatur z.B. an der Messstelle T60 in die Steuerung einzubeziehen, um den Wasservolumenstrom durch den Ölkühler zu regeln. Alternativ könnte eine Bauteiltemperatur, z.B. eine Lageraußenringtemperatur verwendet werden.

Besonders bevorzugt wird vorgeschlagen, eine Eintrittstemperatur des Druckgases in die zweite Verdichterstufe, somit besonders an der Messstelle T31 mit in die Steuerung einzubeziehen, um die zweite Verdichterstufe vor Übertemperatur zu schützen, und insbesondere den Wirkungsgrad zu erhöhen.

Mit dem Aufbau der Figur 2 kann zudem eine hohe Temperatur des Kühlmittels am Kühlkreislaufauslass, nämlich am Austritt zum Wärmetauscher 10 und damit an der Temperaturmessstelle T14 erreicht werden. Es ist eine Temperatur von 85-95°C, insbesondere 90°C bis 95°C erzielbar. Das kann durch die Reihenschaltung des ersten und zweiten Druckgaskühler 3 und 4 zu den Mantelkühlern 41, 42 und dem Ölkühler 5 erreicht werden.

Der erste und zweite Druckgaskühler 3 und 4 erhalten dadurch Kühlmittel mit einer gegenüber der Temperatur T10 erhöhten Temperatur, sodass sie das so bereits vorgewärmte Kühlmittel weiter erwärmen können.

Dadurch kann insgesamt eine höhere Temperatur des Kühlmittels erreicht werden. Damit kann die Abwärme in dem Kühlmittel besser genutzt werden.

Die Ausführungsform der Fig. 2 sieht ein Primär-Bypass-Stellventil V19 vor, das vereinfachend auch als Bypassventil V19 bezeichnet werden kann, und über das ein Teil des Gesamtkühlmittelstroms des Primärkühlkreislaufs 50 vor dem Abgriff - gemäß einer Ausführung auch nach dem Abgriff - durch den ersten und zweiten Mantelkühler 1, 2 und den Ölkühler 5 dem Zwischenkühler 3 und Nachkühler 4 zugeführt werden kann. Hier wird nämlich besonders eine Reihenschaltung des Ölkühlers 5 und des ersten und zweiten Mantelkühlers 41, 42 mit den beiden Druckgaskühlern, also dem Zwischenkühler 3 und dem Nachkühler 4 vorgesehen. Die beiden Druckgaskühler erhalten somit von dem Ölkühler 5 und dem ersten und zweiten Mantelkühler 41, 42 erwärmtes Kühlmittel. Durch das Ventil V19 kann aber doch kühleres Kühlmittel, das nämlich noch nicht den Ölkühler 5 und den ersten und zweiten Mantelkühler 41, 42 passiert hat, den beiden Druckgaskühlern zugeführt werden, wodurch der Volumenstrom zum Ölkühler verringert werden kann. Das kann besonders bei einem Kaltstart eingesetzt werden, wie unten noch erläutert wird.

Die Reihenschaltung des Ölkühlers 5 und des ersten und zweiten Mantelkühlers 41, 42 mit den beiden Druckgaskühlern, also dem Zwischenkühler 3 und dem Nachkühler 4 wird als eine optimierte Verschaltung zur Abwärmenutzung auf hohem Temperaturniveau vorgeschlagen. Der Ölkühler 5 und die Mantelkühlung 41, 42 erhalten hier einen maximalen Volumenstrom mit noch nicht vorgewärmtem Primärwasser, das noch die Temperatur T10 hat.

Das Primär-Bypass-Stellventil V19 wird besonders beim Kaltstart eingesetzt. Wenn das Öl noch nicht die Betriebstemperatur erreicht hat, ist das Primär-Bypass-Stellventil V19 geöffnet. Bei noch kaltem Kühlmittel, also kaltem Wasser besonders mit niedrigen Temperaturen an den Temperaturmessstellen T10, T13, T15 kann auch das Stellventil V13 geschlossen sein. Es wurde jedoch erkannt, dass die Ventile V11 und V12 schon sehr schnell nach dem Kaltstart einen ausreichenden Wasserdurchfluss steuern sollten. Daher wird vorgeschlagen, beim Kaltstart das Ventil V19 zu öffnen. Im Betrieb, wenn der Kaltstartvorgang abgeschlossen ist, wird vorgeschlagen, das Bypassventil V19 wieder etwas zu schließen, damit der Ölkühler und die Mantelkühlung einen relativ hohen Kühlwasservolumenstrom bekommen können.

Eine vorgegebene Wasseraustrittstemperatur, also Solltemperatur, an der Messstelle T14 kann sich nur aus einer Mischung der Teilkühlmittelströme mit den Temperaturen T11 und T12 ergeben. Bei diesen beiden Kühlern können höhere Austrittstemperaturen erreicht werden. Besonders kann dadurch eine hohe Austrittstemperatur T14 erreicht werden.

Es wurde erkannt, dass sich folgende Vorteile ergeben.

Es kann die Abwärme vom Ölkühler und von der Mantelkühlung zur Abwärmenutzung bereitgestellt werden, auch bei Wassertemperaturen, also Kühlmitteltemperaturen, bei denen dies bisher nicht möglich ist.

Es kann eine höhere Solltemperatur für die Austrittstemperatur T14 erreicht werden, da nur die Teilkühlmittel mit den Temperaturen T11 und T12 bzw. an den Messstellen T11 und T12 gemischt werden, wodurch sich eine Mischtemperatur ergibt, die nicht durch Kühlmittel mit den Temperaturen T16 und T15 heruntergemischt werden. Temperaturen von 85-95°C, insbesondere 90°C bis 95°C sind als Austrittstemperatur T14 des Kühlmittels des Primärkühlkreislaufs erreichbar.

Es können somit mit einem Wassersystem hohe Temperaturen und gleichzeitig hohe Leistungen erreicht werden, für die sonst ein Heißwassersystem erforderlich wäre.

Nachfolgend eine Zusammenfassung einiger wesentlicher Aspekte der Ausführung gemäß Fig. 2.

Es gibt zwei Kühlwasserkreisläufe 50, 5800.

Die Kühler 3, 4, 5 und die Mantelkühlung der Stufen 1, 2 befinden sich im primären Kreislauf 50. Dabei gibt es hier zunächst eine Parallelschaltung des Ölkühlers 5 und der Mantelkühlung der Stufen 1, 2. In Reihe sind danach der Zwischenkühler 3 und der Nachkühler 4 geschaltet. Diese sind zueinander ebenfalls parallelgeschaltet.

Der sekundäre Kreislauf 580 kühlt hier bedarfsweise den primären Kreislauf 50.

Diese Verschaltungsvariante bietet besondere Vorteile bei der Wärmerückgewinnung über den Wärmetauscher 10, die auch als Abwärmenutzung bezeichnet werden kann.

Es ergeben sich folgende Vorteile.

Höhere Wärmerückgewinnungsleistung möglich und ggf. weniger/kein Kühlwasserbedarf.

Eine Regelung auf eine höhere Wasseraustrittstemperatur T14, also die Möglichkeit der Vorgabe eines höheren Sollwertes für diese Wasseraustrittstemperatur T14, nämlich höher als bisher ist möglich, z.B. 90°C...95°C statt -80° oder 85°C, wie bisher.

Es ergeben sich die folgenden weiteren Vorteile.

Eine optimierte Regelung der gemischten Wasseraustrittstemperatur T14 mit separater Volumenstromregelung je Wärmequelle ist möglich.

Der Anwender kann eine Wasseraustrittstemperatur T14 vorgeben.

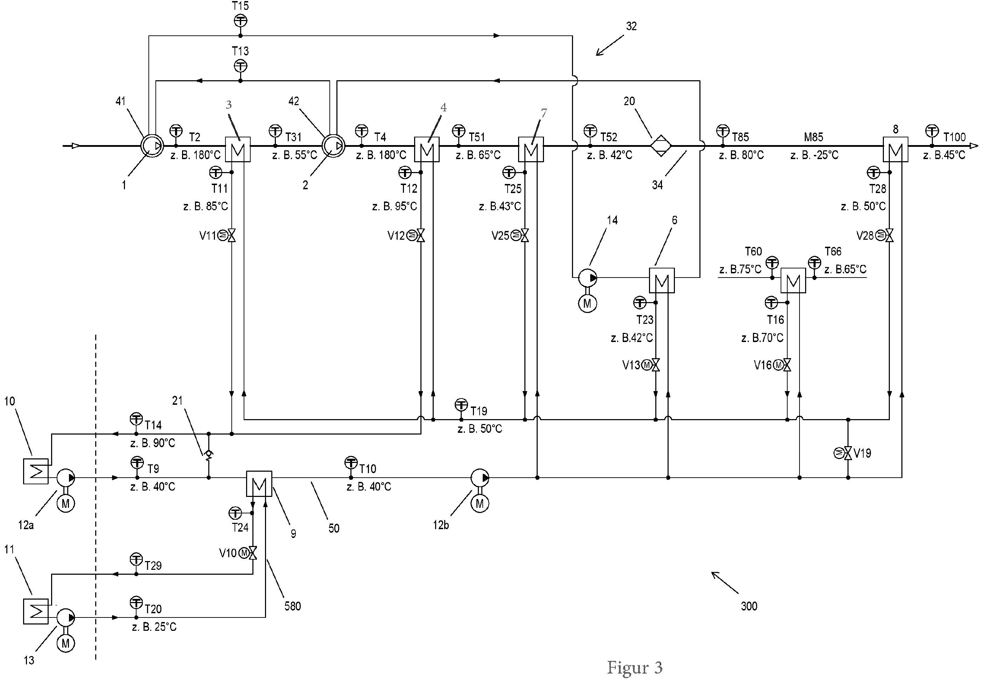

Der Ölkühler bekommt immer nur so viel Wasser wie nötig, um die optimale Öltemperatur zu erreichen. Die nachfolgende Figur 3 beschreibt eine andere Ausführungsform, der besseren Übersichtlichkeit halber werden aber teilweise identische Bezugszeichen zur Ausführungsform der Fig. 2 verwendet, um Zusammenhänge besser zu zeigen. Es ist dafür aber nicht erforderlich, dass die Elemente tatsächlich identisch sind.

Fig. 3 zeigt eine Ausführungsform einer Kompressoreinrichtung 300, die für den ersten und zweiten Mantelkühler 41, 42 einen Mantelkühlerwärmetauscher 6 vorsieht. Mantelkühler 41, 42 können auch hier in Reihe geschaltet sein. Ein Kühlmittelstrom durch die Mantelkühler 41, 42 wird durch eine Mantelkühlerpumpe 14 getrieben und treibt somit einen eigenen Kühlkreislauf an, der als Verdichterkühlkreislauf 32 bezeichnet werden kann, denn das Kühlmittel strömt durch entsprechende Mantelbereiche im ersten bzw. zweiten Verdichter 1, 2. Die Mantelkühlerpumpe 14 ist somit eine Kühlwasserpumpe für den Verdichterkühlkreislauf 32. Der Verdichterkühlkreislauf 32 bzw. das Kühlmittel darin, durchströmt den ersten und zweiten Mantelkühler 41, 42 und wird durch den Wärmetauscher 6 geführt, nämlich durch eine Primärseite des Mantelkühlerwärmetauschers 6. Durch die Sekundärseite des Mantelkühlerwärmetauschers 6 strömt Kühlmittel aus dem Primärkühlkreislauf 50. Der entsprechende Kühlmittelstrom vom Primärkühlkreislauf 50 durch den Mantelkühlerwärmetauscher 6 wird durch das Stellventil V13 gesteuert.

Als relevante Temperaturen werden Temperaturen an den Temperaturmessstellen T9, T10, T11, T12, T14, T16, T19, T20, T23, T24, T28, T29, T31, T51, T 52, T85, T100 aufgenommen. Zusätzlich kann auch der Drucktaupunkt M85 nach dem Adsorptionstrockner 20 aufgenommen werden.

Vorzugsweise wird das Ventil V13 in Abhängigkeit von den Temperaturen des Kühlmittels angesteuert, das den ersten und/oder zweiten Mantelkühler 41, 42 verlässt.

Temperaturen an Messstellen Txx mit "xx" als Platzhalter für die jeweilige Nummer der Temperatur bzw. Messstelle, können nachfolgend und vorstehend auch vereinfachend und synonym als Temperaturen Txx bezeichnet werden.

Beim Kaltstart bleibt V13 geschlossen, sodass es dann keine Kühlmittelströmung bei T23 gibt. Bei der Temperaturmessstelle T23 ergibt sich dann somit auch keine steigende Temperatur. Wenn die Temperaturen des Kühlmittels steigen, das den ersten und/oder zweiten Mantelkühler 41, 42 verlässt, wird das Ventil V13 durch die Steuerung geöffnet, was auch als "auf geregelt" bezeichnet werden kann. Erst dann könnte die Temperatur an der Messstelle T23 für die Regelung verwendet werden.

Das Stellventil V13 kann als Mantelkühlerstellventil bezeichnet werden und es steuert den Kühlmittelstrom durch den Mantelkühlerwärmetauscher 6. In anderen Ausgestaltungen kann es auch den Kühlmittelvolumenstrom für die Mantelkühler 41, 42 steuern. Das Ventil V13 steuert die Temperaturen des Kühlmittels, das den ersten und/oder zweiten Mantelkühler 41, 42 verlässt.

Fig. 3 weist zudem einen zweiten und dritten Nachkühler 7, 8 auf, die auch als zweiter und dritter Druckluftnachkühler bezeichnet werden können und hier besonders als Wärmetauscher ausgebildet sind. Sie sind in einer Druckgasleitung 34 angeordnet, nämlich strömungsabwärts des Druckgases hinter dem Nachkühler 4 bzw. Druckgasnachkühler 4. Dadurch kann eine zusätzliche Kühlung des Druckgases erreicht werden. Der dritte Druckluftnachkühler bzw. Druckgasnachkühler kann auch synonym als Trocknernachkühler bezeichnet werden.

Besonders bevorzugt ist es, was auch die Ausführungsform der Fig. 3 zeigt, einen Trockner für das Druckgas, insbesondere einen Adsorptionstrockner 20, zu verwenden, der in die Druckgasleitung 34 eingebunden ist. Bei einem Kältetrockner ergibt ein zusätzlicher Nachkühler 7 ebenfalls Sinn, um hierüber den Taupunkt und die Austrittstemperatur zu regeln. Der dritte Druckluftnachkühler 8 ergibt beim Kältetrockner jedoch so wie dargestellt weniger Sinn. Beim Kältetrockner könnte der dritte Druckluftnachkühler 8 eher zum Aufwärmen der Druckluft verwendet werden. Daher wird hier besonders die Verwendung eines Adsorptionstrockners vorgeschlagen. Beim Adsorptionstrockner wird der dritte Druckluftnachkühler 8 besonders zum Abkühlen der Druckluft verwendet.

Hier wird besonders vorgeschlagen, dass der Druckgastrockner 20 in Strömungsrichtung des Druckgases hinter dem zweiten Nachkühler 7 und vor dem dritten Nachkühler 8 angeordnet ist.

Zum Steuern eines Kühlmittelstroms sowohl durch den zweiten Nachkühler 7 als auch den dritten Nachkühler 8 ist jeweils ein Stellventil V25 bzw. V28 vorgesehen. Somit können selbst der zweite und dritte Nachkühler 7, 8 unabhängig voneinander gesteuert werden.

Zusätzlich ist jeweils eine Temperaturmessstelle T25 bzw. T28 vorgesehen und dem zweiten bzw. dritten Nachkühler 7, 8 und damit dem entsprechenden Stellventil V25 bzw. V28 zugeordnet.

Hier wurde besonders erkannt, dass mit dem zweiten Nachkühler 7 der Trockner unterstützt werden kann und somit der Drucktaupunkt nach dem Trockner beeinflusst werden kann. Hierdurch reduziert sich jedoch auch die Austrittstemperatur aus dem Trockner, was manchmal erwünscht ist, aber manchmal auch unerwünscht ist.

Mit dem Wärmetauscher, also Nachkühler nach dem Trockner kann die Druckluft auf die optimale Temperatur für die nachgelagerte Anwendung gebracht werden. Bei einem Adsorptionstrockner kann die Luft am Austritt deutlich wärmer sein als am Eintritt, sodass hier eine nochmalige Kühlung erforderlich sein kann.

Das Stellventil V25, das den Kühlmittelstrom durch den zweiten Nachkühler 7 steuert, kann diesen Kühlmittelstrom in Abhängigkeit von der Temperatur steuern, die durch die Temperaturmessstelle T25 erfasst wird. Vorzugsweise wird mit dem Ventil V25 jedoch die Luftaustrittstemperatur T52 geregelt. Der Sollwert für diese Temperatur T52 ergibt sich bei Anlagen mit Trockner durch eine Regelkaskade aus dem gewünschten Drucktaupunkt nach dem Trockner. Bei Anlagen ohne Trockner ergibt sich der Sollwert für die Temperatur T52 aus dem Sollwert für die Temperatur T100, die von extern vorgegeben werden kann.

Eine Regelung nach der Temperatur T25, bzw. nach einer Temperaturdifferenz T25-T20 ist gemäß einer weiteren Ausgestaltung auch möglich.

Das Stellventil V25 steuert also den Kühlmittelstrom in Abhängigkeit von der Austrittstemperatur der Druckluft an der Temperaturmessstelle T52 aus dem zweiten Nachkühler 7.

Ebenso ist vorgesehen, dass das Stellventil V28, das den Kühlmittelstrom durch den dritten Nachkühler 8 steuert, die Druckluftaustrittstemperatur T100 regelt. Eine Regelung nach der Temperatur T28 oder der Differenztemperatur T28-T20 ist gemäß einer alternativen Ausgestaltung vorgesehen.

Dies kann somit in Abhängigkeit von der Temperatur der Temperaturmessstelle T28 erfolgen, es ist also möglich, den Kühlmittelstrom in Abhängigkeit von der Kühlmitteltemperatur am Ausgang des dritten Nachkühlers 8 zu steuern.

In der gezeigten Ausführungsform ist zusätzlich vorgesehen, dass ein Sekundärkühlkreislauf 580 einen Kühlmittelstrom, insbesondere Gesamtkühlmittelstrom, des Primärkühlkreislaufs 50 kühlt, und dazu ist ein entsprechender Primär-Sekundär-Wärmetauscher 9 vorgesehen. Zur Ansteuerung ist zudem das Stellventil V10 vorgesehen, das somit in einem Kühlmittelstrang, und damit auch in einem Kühlmittelstrom, nämlich im sekundären Kühlkreislauf des Primär-Sekundär-Wärmetauschers 9, angeordnet ist. Die Ansteuerung des Stellventils V10 kann in Abhängigkeit von einer Nachlauftemperatur des Kühlmittels, das den Primär-Sekundär-Wärmetauscher 9 verlässt, erfolgen. Dafür ist eine Temperaturmessstelle T10 vorgesehen. Die Temperatur des Kühlmittels, das durch das Stellventil V10 strömt, kann an der Temperaturmessstelle T24 erfasst werden.

Es wird vorgeschlagen, die Primärkühlmittelpumpe 12 gemäß Fig. 2 in der in Fig. 3 gezeigten Ausführungsform aufzusplitten, also stattdessen zwei Primärkühlmittelpumpen 12a und 12b vorzusehen, nämlich eine vor und die andere nach dem Primär-Sekundär-Wärmetauscher 9. Außerdem kann ein Primärkreislauf-Bypass 21 vorgesehen sein, über den ein Teil des Gesamtkühlmittelstroms des Primärkühlkreislaufs 50 an dem Primärwärmetauscher 10 vorbeiströmt. Durch die interne Pumpe 12b kann in Zusammenspiel mit dem Bypass 21 und dem Wärmetauscher 9 der Betrieb des Kompressors und damit der Druckluftversorgung aufrechterhalten werden, auch wenn die externe Wärmesenke 10 und/oder die Pumpe 12a nicht zur Verfügung stehen. Das kann z.B. bei Wartungsarbeiten oder Umbaumaßnahmen, bzw. auch bei saisonalem Wärmebedarf der Fall sein.

Die externe Pumpe 12a ist insbesondere für die externen Druckverluste, nämlich im Wärmetauscher 10 und in Rohrleitungen und ggf. weiteren Elementen, ausgelegt. Die interne Pumpe 12b kann zur Unterstützung mitlaufen oder auch nur für den Bedarfsfall in Bereitschaft stehen. Sie schaltet sich dann erst zu, wenn die Primärkühlmittelpumpe 12a kein oder zu wenig Wasser liefert und der Kompressor sonst zu heiß werden würde und es zu einer Abschaltung kommen würde.

Außerdem ist eine Drucktaupunkttemperatur-Messstelle M85 nach der Trocknungseinrichtung 20 vorgesehen. Somit wird an der Stelle die Drucktaupunkttemperatur bestimmt und davon abhängig kann die Kühlung gesteuert werden. Insbesondere wird vorgeschlagen, in Abhängigkeit von der Drucktaupunkttemperatur den zweiten Nachkühler 7 zu steuern und/oder das Ventil V25.

Einen großen Effekt hat hierbei das Ventil V25, wenn der zusätzliche Nachkühler 7 vorhanden ist.

Zudem kann durch das Ventil V11 (weniger öffnen, um die Temperatur T31 zu erhöhen) und das Ventil V12 (mehr öffnen um die Temperatur T51 zu reduzieren) der Taupunkt M85 verbessert werden.

Durch eine höhere Temperatur T31 ergibt sich eine höhere Regenerationstemperatur für den Trockner, so dass ein geringerer Taupunkt M85 erreicht werden kann.

Es wurde erkannt, dass den größten Effekt das Ventil V25 hat, sofern der zusätzliche Nachkühler 7 vorhanden ist. Zudem kann durch das Ventil V11, indem es weniger geöffnet, um die Temperatur T31 zu erhöhen, und das Ventil V12, indem es weiter geöffnet wird, um die Temperatur T51 zu reduzieren, der Taupunkt M85 verbessert werden kann.

Es wurde auch erkannt, dass sich durch eine höhere Temperatur T31 eine höhere Regenerationstemperatur für den Trockner, insbesondere den Adsorptionstrockner 20 erreichen lässt, so dass ein geringerer Taupunkt M85 erreicht werden kann.

Besonders ist der Drucktaupunkt nach dem Trockner relevant. Am Eintritt des Trockners ist die Druckluft meist zu 100% gesättigt. Daher stimmen hier die Temperatur und der Drucktaupunkt nahezu überein, vorausgesetzt, das ausgefallene Kondensat wurde vor dem Trockner möglichst vollständig abgeschieden und abgeleitet.

Für das Trocknungsergebnis ist besonders die Temperatur des Druckgases am Eintritt in den Trockner wichtig.

Wenn das Kondensat vor dem Trockner nicht abgeschieden werden würde, dann würde das Trocknungsergebnis etwas schlechter werden. Der Kompressor sollte jedoch so ausgelegt sein, dass das bereits ausgefallene Kondensat vorher schon abgeschieden wird.

Die Kondensatabscheider und -ableiter wurden in den Abbildungen teilweise aus Vereinfachungsgründen nicht dargestellt.

Die Ausführungsform gemäß Fig. 3 ist so gestaltet, dass der zweite Nachkühler 7 und dritte Nachkühler 8 in einer Parallelschaltung an den Primärkühlkreislauf 50 angeschlossen sind. Ein Sekundärkühlkreislauf 580 ist ebenfalls vorgesehen, der wie in Fig. 2 ausgestaltet und mit dem Primärkühlkreislauf 50 gekoppelt ist.

Der Zwischenkühler 3 und Nachkühler 4, der synonym in dieser und den übrigen Ausführungsformen auch als erster Nachkühler 4 bezeichnet werden kann, sind, ähnlich wie in der Ausführungsform der Fig. 2, nicht in einer Parallelschaltung an den Primärkühlkreislauf 50 angeschlossen, sondern in einer Reihenschaltung, in der ihnen das Kühlmittel aus dem Primärkühlkreislauf 50 zugeführt wird, nachdem es durch die übrigen Kühler geströmt ist. Ein Primär-Bypass-Stellventil V19, wie in Fig. 2 gezeigt, ist hier entbehrlich, da insbesondere durch den zweiten Nachkühler 7 zusammen mit dem Stellventil V25 immer ein ausreichender Wasservolumenstrom strömt, sodass der in Reihe nachgeschaltete Zwischenkühler 3 und der Nachkühler 4 immer einen ausreichenden Volumenstrom bekommen können. Es ist als mögliche Alternative dennoch vorsorglich eingezeichnet. Dieses Primär-Bypass-Stellventil V19 könnte zum Einsatz kommen, wenn das Ventil V28 geschlossen ist, weil die Temperatur T100 ausreichend gering ist und das Ventil V25 geschlossen ist, weil der Drucktaupunkt M85 ausreichend gering ist. Dann muss das Ventil V19 öffnen, sodass insbesondere der Wärmetauscher 3 nach dem Verdichter bzw. der Verdichterstufe 1 mehr und kühleres Wasser bekommt, da hierdurch der Wirkungsgrad der Verdichtung verbessert wird.

Dennoch könnte diese Ausführung mit Primär-Bypass-Stellventil V19 und Wärmetauschersteuerventil V25 realisiert werden. Sie könnte in einem Sonderfall sinnvoll sein, wenn im Winter wärmere Druckluft benötigt würde. Dann müssten die Ventile V28 und V25, für den Nachkühler so weit geschlossen werden, dass ohne das Primär-Bypass-Ventil V19 öffnen zu müssen, nicht genug Wasser für den Zwischenkühler und Nachkühler zugeführt werden könnte.

Durch das Primär-Bypass-Stellventil V19 kann erreicht werden, dass dem Zwischenkühler 3 und Nachkühler 4 ein Teil des Kühlmittels zugeführt werden, das nicht den dritten Nachkühler 8 durchströmt hat. Es ist nämlich auch vorgesehen, dass der Zwischenkühler 3 und der Nachkühler 4 in dem Primärkühlkreislauf in einer Reihenschaltung angeordnet bzw. verschaltet sind, zueinander allerdings parallelgeschaltet sind. Durch diese Reihenschaltung kann durch die Zwischenkühler 3 und Nachkühler 4 eine höhere Kühlwassertemperatur erreicht werden, insbesondere am Ausgang des Primärkühlkreislaufs 50 kann die Austrittstemperatur des Kühlwassers bei T14 besonders hoch ausfallen.

Zu den Ausführungen der Fig. 2 und 3 ist Folgendes zu bemerken. In diesen beiden Ausführungsformen sind der Zwischenkühler 3 und der Nachkühler 4 zum Primärkühlkreislauf in Reihe geschaltet, wobei der Einfachheit halber für die nachfolgende Erläuterung das Primär-Bypass-Stellventil V19 außer Acht gelassen wird. Der Zwischenkühler 3 und der Nachkühler 4 erhalten somit zusammen den vollständigen Kühlmittelstrom, also den Gesamtkühlmittelstrom des Primärkühlkreislaufs 50, der bereits einen Kühler durchströmt hat und daher gegenüber der Temperatur T10 erwärmt ist, da dies durch die Reihenschaltung bedingt ist. Dadurch können Zwischenkühler 3 und der Nachkühler 4 ein Kühlmittel mit einer vergleichsweise hohen Temperatur abgeben.

Für die Ausführungsform der Figur 3, und andere Ausführungsformen, ergeben sich folgende Vorteile:
Eine maximale Wärmerückgewinnung, bei ausreichender Wärmeabnahme, und Betrieb ohne Kühlwasser, sind möglich. Es kommt somit in Betracht, dass das sekundäre Kühlsystem 11 nicht genutzt werden muss, aber bereitstehen kann, für den Fall, dass mal weniger Wärme benötigt wird oder der Kompressor eine bessere Kühlung benötigt.

Als eine Anwendung wird hierfür ein angeschlossenes Gebäudeheizsystem vorgeschlagen. Das kann folgende Wirkung haben. Im Winter kann die gesamte Wärme über den Wärmetauscher 10 genutzt werden. Im Sommer hingegen wird weniger Wärme benötigt, aber die Wärme muss trotzdem abgeführt werden. Dies erfolgt dann über den Primär-Sekundär-Wärmetauscher 9, das sekundäre Kühlsystem 11 und das Ventil V10.

Je nach Temperaturanforderung und Alternative kann ca. 10...30 % mehr Abwärmenutzung möglich sein. Eine maximale Abwärmenutzung ist bei einer um ca. 5K...10K höheren Wassereintrittstemperatur möglich.

Eine sehr hohe Wasseraustrittstemperatur T14 ist möglich, besonders bis etwa -95°C.

Ausreichende Mantelkühlung und Ölkühlung mit Heizungswasser bei hohem Volumenstrom ist möglich, besonders über das primäre Wassersystem mit den Zu- bzw. Ablauftemperaturen T10 bzw. T14.

Ein ausreichender Taupunkt kann erreicht werden, da der Nachkühler 7 einen großen Volumenstrom kühlen Heizungswassers bekommt.

Bei Bedarf ist eine geringe Druckluftaustrittstemperatur möglich, da der Nachkühler 8 kühles Heizungswasser bekommt.

Zum Steuern des Verdichterkühlkreislaufs 32, der auch als Mantelkühkreislauf bezeichnet werden kann, sind das Steuerventil V13 und eine Mantelkühlerpumpe 14 vorgesehen. Diese bilden eine mögliche Variante für den Mantelkühlkreislauf.

Weiterhin sind in Figur 3 die Temperaturen T2 und T4 eingezeichnet. Beide können bspw. 180°C annehmen. Dies soll verdeutlichen, dass damit leicht die hohen Wasseraustrittstemperaturen T11, T12 und T14 von z.B. 90°C erreicht werden können, was mit den Temperaturen T16 und T23, die in Figur 1 gezeigt sind, nicht möglich ist.

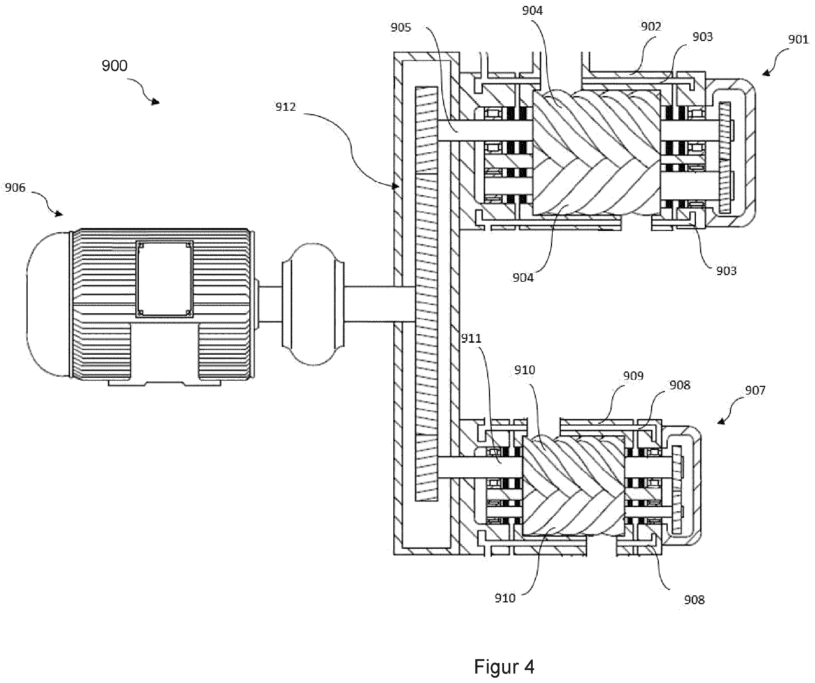

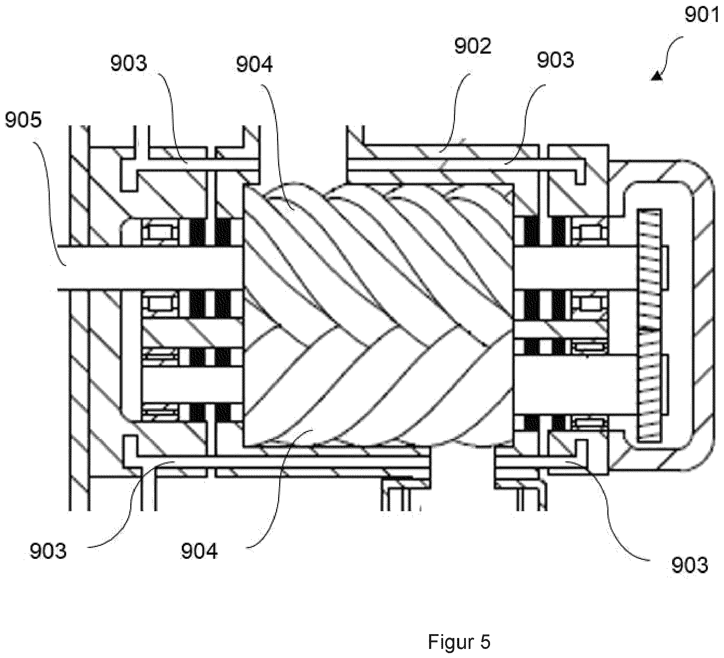

Fig. 4 zeigt einen Kompressor 900 mit einer ersten und einer zweiten Verdichterstufe 901 bzw. 907 in einer schematischen, teilweise geschnittenen Darstellung. Dazu zeigt die Figur 5 eine erste Verdichterstufe 901 in einer vergrößerten Darstellung. Nachfolgend wird auf die Figur 4 Bezug genommen, soweit die erste Verdichterstufe erklärt wird, wird zusätzlich auf Figur 5 Bezug genommen.

Die Figur 4 zeigt somit einen trockenlaufenden Schraubenverdichter, der im Wesentlichen den Kompressor 900 bildet. Die erste Verdichterstufe 901 führt somit im Betrieb eine Kompression einer ersten Stufe durch. Dazu weist die erste Verdichterstufe 901 ein Gehäuse 902 auf, sowie Kühlmittelkanäle 903 einer Mantelkühlung, die besonders in Figur 5 deutlicher dargestellt sind.

Zum Verdichten des Druckgases, besonders der Druckluft, sind Verdichterschrauben 904 vorgesehen, die zum Verdichten ineinandergreifen. Sie werden über eine Antriebswelle 905 der entsprechenden Verdichterstufe angetrieben. Die zweite Verdichterstufe 907, die das in der ersten Verdichterstufe komprimierte Gas, insbesondere komprimierte Luft, weiter komprimiert, weist ein Gehäuse 909 mit Kühlmittelkanälen 908 und Verdichterschrauben 910 auf, die über eine Antriebswelle 911 angetrieben werden.

Beide Antriebswellen 905 und 911 werden über einen gemeinsamen Antriebsmotor 906 angetrieben, und dazu ist ein Getriebe 912 vorgesehen, das die Antriebsleistung vom Antriebsmotor auf die beiden Antriebswellen 905 und 911 verteilt, um dadurch die Verdichterschrauben 904 und 910 anzutreiben.

Über die Mantelkühlung, die mit Hilfe der Kühlmittelkanäle 903 und 908 realisiert wird, können die beiden Verdichterstufen 901 und 907 gekühlt werden. Dazu fließt ein Kühlmedium, insbesondere Kühlwasser, durch diese Kühlmittelkanäle 903 und 908, und das kann zusammen oder individuell gesteuert werden.

## Patentansprüche

1. Kompressoreinrichtung mit
- einem Kompressor (130; 900), insbesondere trockenverdichtendem Schraubenkompressor, zum Verdichten eines Gases zum Erzeugen von Druckgas, insbesondere Druckluft, wobei der Kompressor wenigstens eine Verdichterstufe (1; 2; 131; 132; 901; 907) aufweist, und
- einer Kühleinrichtung und die Kühleinrichtung umfasst
- einen Ölkühler (135; 5) zum Kühlen von durch den Kompressor (130; 900) erwärmten Öl,
- wenigstens einen Druckgaskühler (3; 4) zum Kühlen des ganz oder teilweise zum Druckgas verdichteten Gases, und
- wenigstens einen Gehäusekühler zum Kühlen eines Gehäuses oder eines Teils des Gehäuses des Kompressors (130; 900), wobei
- der Ölkühler (135; 5), der wenigstens eine Druckgaskühler (3; 4) und der wenigstens eine Gehäusekühler jeweils dazu vorbereitet sind, das Kühlen durch einen Kühlmittelstrom aus einem flüssigen Kühlmittel, insbesondere Wasser, zu erreichen und wobei die Kompressoreinrichtung **dadurch gekennzeichnet ist, dass**
- für den wenigstens einen Gehäusekühler wenigstens ein Gehäusekühlersteuermittel zum individuellen Steuern des Kühlmittelstroms durch den Gehäusekühler vorgesehen ist, und
- die Kompressoreinrichtung (100; 300) eine Kühlsteuerung aufweist, die dazu eingerichtet ist, das wenigstens eine Gehäusekühlersteuermittel so anzusteuern, dass der wenigstens eine Kühlmittelstrom durch den wenigstens einen Gehäusekühler unabhängig von dem Kühlmittelstrom durch den Ölkühler (135; 5) gesteuert wird.

2. Kompressoreinrichtung (100; 300) nach Anspruch 1, **dadurch gekennzeichnet, dass**
- die Kühlsteuerung dazu eingerichtet ist, das wenigstens eine Gehäusekühlersteuermittel so anzusteuern, dass der wenigstens eine Kühlmittelstrom durch den wenigstens einen Gehäusekühler unabhängig von dem wenigstens einen Kühlmittelstrom durch den wenigstens einen Druckgaskühler (3; 4) gesteuert wird,
und/oder dass
- die Kühlsteuerung dazu eingerichtet ist, dass nur für den wenigstens einen Gehäusekühler ein Kühlmittelstrom individuell, insbesondere mittels des Gehäusekühlersteuermittels gesteuert wird, während Kühlmittelströme für den Ölkühler (135; 5) und den wenigstens einen Druckgaskühler (3; 4) nicht oder nur über eine gemeinsame Steuerung eines Gesamtkühlmittelstroms gesteuert werden.

3. Kompressoreinrichtung (100; 300) nach Anspruch 1 oder 2, **dadurch gekennzeichnet, dass**
- der Kompressor wenigstens einen Rotor zum Verdichten des Druckgases aufweist und wenigstens ein Kompressorspalt zwischen dem Gehäuse und dem wenigstens einen Rotor oder zwischen zwei Rotoren ausgebildet ist, der eine veränderliche Spaltdicke aufweist, und
- die Kühlsteuerung dazu eingerichtet ist, das wenigstens eine Gehäusekühlersteuermittel so anzusteuern, dass die Spaltdicke innerhalb eines vorgebbaren Bereichs bleibt, und/oder dass die Spaltdicke einer vorgebbaren Spaltsolldicke nachgeführt wird, und/oder dass
- die Kühlsteuerung dazu eingerichtet ist, dass eine bzw. die Spaltdicke des Kompressors (130; 900) erfasst und/oder geschätzt wird und
- das wenigstens eine Gehäusekühlersteuermittel in Abhängigkeit von der erfassten bzw. geschätzten Spaltdicke gesteuert wird.

4. Kompressoreinrichtung (100; 300) nach einem der Ansprüche 1 bis 3, **dadurch gekennzeichnet, dass** die Kühlsteuerung dazu eingerichtet ist, dass
- wenigstens eine Austrittstemperatur des ganz oder teilweise zu Druckgas komprimierten Gases beim Austreten aus der wenigstens einen Verdichterstufe (1; 2; 131; 132; 901; 907) erfasst wird,
- ein Vorgabetemperaturwert für die Austrittstemperatur bestimmt wird, bei dem eine optimale Spaltdicke zu erwarten ist, wobei der Vorgabetemperaturwert insbesondere im laufenden Betrieb bestimmt wird, und
- das wenigstens eine Gehäusekühlersteuermittel so gesteuert wird, dass die Austrittstemperatur dem Vorgabetemperaturwert nachgeführt wird, insbesondere, dass die Austrittstemperatur auf den Vorgabetemperaturwert als Solltemperatur ausgeregelt wird.

5. Kompressoreinrichtung (100; 300) nach einem der Ansprüche 1 bis 4, **dadurch gekennzeichnet, dass** die Kühlsteuerung dazu eingerichtet ist, dass
- das wenigstens eine Gehäusekühlersteuermittel in Abhängigkeit von wenigstens einer Kühlmitteltemperatur gesteuert wird insbesondere
- in Abhängigkeit von einer Temperatur aus der Liste aufweisend
- eine an einem Kühlmittelausgang des Gehäusekühlers erfasste Kühlmitteltemperatur, und
- eine stromab des Gehäusekühlers erfasste Kühlmitteltemperatur.

6. Kompressoreinrichtung (100; 300) nach einem der vorstehenden Ansprüche, mit
- einem Kompressor (130; 900) zum Verdichten eines Gases zum Erzeugen von Druckgas, insbesondere Druckluft, und
- einer Kühleinrichtung und die Kühleinrichtung umfasst
- einen Ölkühler (135; 5) zum Kühlen von durch den Kompressor (130; 900) erwärmten Öl,
- wenigstens einen Druckgaskühler (3; 4) zum Kühlen des ganz oder teilweise zum Druckgas verdichteten Gases, und
- wenigstens einen Gehäusekühler zum Kühlen eines Gehäuses oder eines Teils des Gehäuses des Kompressors (130; 900), wobei
- der Ölkühler (135; 5), der wenigstens eine Druckgaskühler (3; 4) und der wenigstens eine Gehäusekühler jeweils dazu vorbereitet sind, das Kühlen durch einen Kühlmittelstrom aus einem flüssigen Kühlmittel, insbesondere Wasser, zu erreichen und wobei
- der Ölkühler (135; 5) und/oder wenigstens einer des wenigstens einen Gehäusekühlers in Reihe zu wenigstens einem des wenigstens einen Druckgaskühler (3; 4) geschaltet sind, sodass ein Kühlmittelstrom diese in Reihe geschalteten Kühler nacheinander durchströmt.

7. Kompressoreinrichtung (100; 300) nach Anspruch 6, **dadurch gekennzeichnet, dass** die Kompressoreinrichtung (100; 300) so aufgebaut ist, dass
- der diese in Reihe geschalteten Kühler durchströmende Kühlmittelstrom zuerst den Ölkühler (135; 5) durchströmt, und
- anschließend den wenigstens einen Druckgaskühler (3; 4) durchströmt, sodass der Ölkühler (135; 5) mit einem Kühlmittel mit geringerer Temperatur durchströmt wird, als der wenigstens eine Druckgaskühler (3; 4).

8. Kompressoreinrichtung (100; 300) nach Anspruch 6 oder 7, **dadurch gekennzeichnet, dass**
- ein Kühlkreislauf vorgesehen ist, zum Bereitstellen des Kühlmittels an einem Kühlkreislaufeinlass und zum Zurücknehmen des durch die Kühler erwärmten Kühlmittels an einem Kühlkreislaufauslass, um das erwärmte Kühlmittel zurückzukühlen oder einer weiteren Verwendung zuzuführen, insbesondere um Wärme des Kühlmittels zu verwenden, und
- die Kompressoreinrichtung (100; 300) eine Kühlsteuerung aufweist, die dazu eingerichtet ist, die Kompressoreinrichtung (100; 300) so zu steuern, dass
- das Kühlmittel am Kühlkreislaufauslass eine Temperatur von 85-95°C, insbesondere 90°C bis 95°C aufweist.

9. Kompressoreinrichtung (100; 300) nach einem der Ansprüche 6 bis 8, **dadurch gekennzeichnet, dass**
- mehrere Druckgaskühler (3; 4) vorgesehen sind und
- die Kompressoreinrichtung (100; 300) so aufgebaut ist, dass das Kühlmittel nachdem es den Ölkühler (135; 5) durchströmt hat, die mehreren Druckgaskühler (3; 4) durchströmt, die insbesondere parallelgeschaltet sind, sodass das Kühlmittel diese mehreren Druckgaskühler parallel durchströmt, und/oder, dass
- die mehreren Druckgaskühler (3; 4) in mehrere Druckgaskühlergruppen aufgeteilt sind, wobei
- Druckgaskühler (3; 4) in jeweils einer Druckgaskühlergruppe zueinander parallelgeschaltet sind, und
- die Druckgaskühlergruppen zueinander in Reihe geschaltet sind, wobei insbesondere
- ein erster und ein zweiter Druckgaskühler (3; 4) zueinander parallelgeschaltet sind und
- zu einem dritten und vierten Druckgaskühler, die zueinander parallelgeschaltet sind, in Reihe geschaltet sind.

10. Verfahren zum Steuern einer Kompressoreinrichtung (100; 300)
- mit einem Kompressor, insbesondere Schraubenkompressor, zum Verdichten eines Gases zum Erzeugen von Druckgas, insbesondere Druckluft, wobei der Kompressor (130; 900) wenigstens eine Verdichterstufe (1; 2; 131; 132; 901; 907) aufweist, und
- mit einer Kühleinrichtung und die Kühleinrichtung umfasst
- einen Ölkühler (135; 5) zum Kühlen von durch den Kompressor (130; 900) erwärmten Öl,
- wenigstens einen Druckgaskühler zum Kühlen des ganz oder teilweise zum Druckgas verdichteten Gases, und
- wenigstens einen Gehäusekühler zum Kühlen eines Gehäuses oder eines Teils des Gehäuses des Kompressors (130; 900), wobei
- der Ölkühler (135; 5), der wenigstens eine Druckgaskühler und der wenigstens eine Gehäusekühler jeweils dazu vorbereitet sind, das Kühlen durch einen Kühlmittelstrom aus einem flüssigen Kühlmittel, insbesondere Wasser, zu erreichen und wobei das Verfahren **dadurch gekennzeichnet ist, dass**
- für den wenigstens einen Gehäusekühler wenigstens ein Gehäusekühlersteuermittel zum individuellen Steuern des Kühlmittelstroms durch den Gehäusekühler vorgesehen ist, und
- die Kompressoreinrichtung (100; 300) eine Kühlsteuerung aufweist, und die Kühlsteuerung das wenigstens eine Gehäusekühlersteuermittel so ansteuert, dass der wenigstens eine Kühlmittelstrom durch den wenigstens einen Gehäusekühler unabhängig von dem Kühlmittelstrom durch den Ölkühler (135; 5) gesteuert wird.

11. Verfahren nach Anspruch 10, **dadurch gekennzeichnet, dass** eine Kompressoreinrichtung (100; 300) nach einem der Ansprüche 1 bis 9 verwendet wird.

12. Verfahren nach Anspruch 10 oder 11, **dadurch gekennzeichnet, dass**
- die Kühlsteuerung nur für den wenigstens einen Gehäusekühler einen Kühlmittelstrom individuell, insbesondere mittels des Gehäusekühlersteuermittels steuert, während Kühlmittelströme für den Ölkühler (135; 5) und den wenigstens einen Druckgaskühler nicht oder nur über eine gemeinsame Steuerung eines Gesamtkühlmittelstroms gesteuert werden.

13. Verfahren nach einem der Ansprüche 10 bis 12, **dadurch gekennzeichnet, dass**
- der Kompressor (130; 900) wenigstens einen Rotor zum Verdichten des Druckgases aufweist und wenigstens ein Kompressorspalt zwischen dem Gehäuse und dem wenigstens einen Rotor ausgebildet ist, der eine veränderliche Spaltdicke aufweist, und
- die Kühlsteuerung das wenigstens eine Gehäusekühlersteuermittel so ansteuert, dass die Spaltdicke innerhalb eines vorgebbaren Bereichs bleibt, und/oder dass die Spaltdicke einer vorgebbaren Spaltsolldicke nachgeführt wird.

14. Verfahren nach einem der Ansprüche 10 bis 13, **dadurch gekennzeichnet, dass** unter Verwendung der Kühlsteuerung
- eine bzw. die Spaltdicke des Kompressors (130; 900) erfasst und/oder geschätzt wird und
- das wenigstens eine Gehäusekühlersteuermittel in Abhängigkeit von der erfassten bzw. geschätzten Spaltdicke gesteuert wird.

15. Verfahren nach einem der Ansprüche 10 bis 14, **dadurch gekennzeichnet, dass** unter Verwendung der Kühlsteuerung
- wenigstens eine Austrittstemperatur des ganz oder teilweise zu Druckgas komprimierten Gases beim Austreten aus der wenigstens einen Verdichterstufe (1; 2; 131; 132; 901; 907) erfasst wird,
- ein Vorgabetemperaturwert für die Austrittstemperatur bestimmt wird, bei dem eine optimale Spaltdicke zu erwarten ist, wobei der Vorgabetemperaturwert insbesondere im laufenden Betrieb bestimmt wird, und
- das wenigstens eine Gehäusekühlersteuermittel so gesteuert wird, dass die Austrittstemperatur dem Vorgabetemperaturwert nachgeführt wird, insbesondere, dass die Austrittstemperatur auf den Vorgabetemperaturwert als Solltemperatur ausgeregelt wird.

## Claims

1. Compressor device, having
- a compressor (130; 900), in particular dry-compressing screw compressor, for compressing a gas for generating compressed gas, in particular compressed air, wherein the compressor has at least one compressor stage (1; 2; 131; 132; 901; 907), and
- a cooling device, and the cooling device comprises
- an oil cooler (135; 5) for cooling oil heated by the compressor (130; 900),
- at least one compressed gas cooler (3; 4) for cooling the gas that is completely or partially compressed to form the compressed gas, and
- at least one housing cooler for cooling a housing or part of the housing of the compressor (130; 900), wherein
- the oil cooler (135; 5), the at least one compressed gas cooler (3; 4) and the at least one housing cooler are each set up to achieve cooling by a coolant flow consisting of a liquid coolant, in particular water, and wherein the compressor device is **characterized in that**
- at least one housing cooler control means for individually controlling the coolant flow through the housing cooler is provided for the at least one housing cooler, and
- the compressor device (100; 300) has a cooling control which is designed to actuate the at least one housing cooler control means in such a way that the at least one coolant flow is controlled by the at least one housing cooler independently of the coolant flow through the oil cooler (135; 5).

2. Compressor device (100; 300) according to Claim 1, **characterized in that**
- the cooling control is designed to actuate the at least one housing cooler control means in such a way that the at least one coolant flow through the at least one housing cooler is controlled independently of the at least one coolant flow through the at least one compressed gas cooler (3; 4) and/or that
- the cooling control is designed to ensure that a coolant flow is controlled individually, in particular by means of the housing cooler control means, only for the at least one housing cooler, while coolant flows for the oil cooler (135; 5) and the at least one compressed gas cooler (3; 4) are not controlled or are controlled only via a common control of an overall coolant flow.

3. Compressor device (100; 300) according to Claim 1 or 2, **characterized in that**
- the compressor has at least one rotor for compressing the compressed gas and at least one compressor gap having a variable gap thickness is formed between the housing and the at least one rotor or between two rotors, and
- the cooling control is designed to actuate the at least one housing cooler control means in such a way that the gap thickness remains within a predeterminable range, and/or that the gap thickness follows a predeterminable desired gap thickness, and/or that
- the cooling control is designed to ensure that a or the gap thickness of the compressor (130; 900) is detected and/or estimated, and
- the at least one housing cooler control means is controlled depending on the detected or estimated gap thickness.

4. Compressor device (100; 300) according to any one of Claims 1 to 3, **characterized in that** the cooling control is designed to ensure that
- at least one outlet temperature of the gas that is completely or partially compressed to form compressed gas is detected when said gas exits from the at least one compressor stage (1; 2; 131; 132; 901; 907),
- a default temperature value for the outlet temperature, at which an optimum gap thickness should be expected, is determined, the default temperature value being determined in particular while the operation is proceeding, and
- the at least one housing cooler control means is controlled in such a way that the outlet temperature follows the default temperature value, in particular that the outlet temperature is adjusted to the default temperature value as the desired temperature.

5. Compressor device (100; 300) according to any one of Claims 1 to 4, **characterized in that** the cooling control is designed to ensure that
- the at least one housing cooler control means is controlled depending on at least one coolant temperature, in particular
- depending on a temperature from the list comprising
- a coolant temperature detected at a coolant outlet of the housing cooler, and
- a coolant temperature detected downstream of the housing cooler.

6. Compressor device (100, 300) according to any one of the preceding claims, having
- a compressor (130; 900) for compressing a gas for generating compressed gas, in particular compressed air, and
- a cooling device, and the cooling device comprises
- an oil cooler (135; 5) for cooling oil heated by the compressor (130; 900),
- at least one compressed gas cooler (3; 4) for cooling the gas that is completely or partially compressed to form the compressed gas, and
- at least one housing cooler for cooling a housing or part of the housing of the compressor (130; 900), wherein
- the oil cooler (135; 5), the at least one compressed gas cooler (3; 4) and the at least one housing cooler are each set up to achieve cooling by a coolant flow consisting of a liquid coolant, in particular water, and wherein
- the oil cooler (135; 5) and/or at least one of the at least one or more housing coolers are/is connected in series to at least one of the at least one or more compressed gas coolers (3; 4) such that a coolant flow flows successively through said series-connected coolers.

7. Compressor device (100; 300) according to Claim 6, **characterized in that** the compressor device (300; 100) is constructed in such a way that
- the coolant flow flowing through said series-connected coolers first of all flows through the oil cooler (135; 5), and
- then flows through the at least one compressed gas cooler (3; 4), and therefore a coolant having a lower temperature flows through the oil cooler (135; 5) than through the at least one compressed gas cooler (3; 4).

8. Compressor device (100; 300) according to Claim 6 or 7, **characterized in that**
- a cooling circuit is provided, for making the coolant available at a cooling circuit inlet and for withdrawing the coolant heated by the coolers at a cooling circuit outlet, in order to cool down the heated coolant or to supply same for a further use, in particular for using the coolant heat, and
- the compressor device (100; 300) has a cooling control which is designed to control the compressor device (100; 300) in such a way that
- the coolant at the cooling circuit outlet has a temperature of 85-95°C, in particular 90°C to 95°C.

9. Compressor device (100; 300) according to any one of Claims 6 to 8, **characterized in that**
- a plurality of compressed gas coolers (3; 4) are provided, and
- the compressor device (100; 300) is constructed in such a way that the coolant, after flowing through the oil cooler (135; 5), flows through the plurality of compressed gas coolers (3; 4), which are in particular connected in parallel such that the coolant flows in parallel through said plurality of compressed gas coolers, and/or that
- the plurality of compressed gas coolers (3; 4) are divided into a plurality of compressed gas cooler groups, wherein
- compressed gas coolers (3; 4) in in each case one compressed gas cooler group are connected in parallel to one another, and
- the compressed gas cooler groups are connected in series to one another, wherein in particular
- a first and a second compressed gas cooler (3; 4) are connected in parallel to each other, and
- are connected in series to a third and fourth compressed gas cooler, which are connected in parallel to each other.

10. Method for controlling a compressor device (100; 300)
- having a compressor, in particular screw compressor, for compressing a gas for generating compressed gas, in particular compressed air, wherein the compressor (130; 900) has at least one compressor stage (1; 2; 131; 132; 901; 907), and
- having a cooling device, and the cooling device comprises
- an oil cooler (135; 5) for cooling oil heated by the compressor (130; 900),
- at least one compressed gas cooler for cooling the gas that is completely or partially compressed to form the compressed gas, and
- at least one housing cooler for cooling a housing or part of the housing of the compressor (130; 900), wherein
- the oil cooler (135; 5), the at least one compressed gas cooler and the at least one housing cooler are each set up to achieve cooling by a coolant flow consisting of a liquid coolant, in particular water, and wherein the method is **characterized in that**
- at least one housing cooler control means for individually controlling the coolant flow through the housing cooler is provided for the at least one housing cooler, and
- the compressor device (100; 300) has a cooling control, and the cooling control actuates the at least one housing cooler control means in such a way that the at least one coolant flow through the at least one housing cooler is controlled independently of the coolant flow through the oil cooler (135; 5).

11. Method according to Claim 10, **characterized in that** a compressor device (100; 300) according to any one of Claims 1 to 9 is used.

12. Method according to Claim 10 or 11, **characterized in that**
- the cooling control controls a coolant flow individually, in particular by means of the housing cooler control means, only for the at least one housing cooler while coolant flows for the oil cooler (135; 5) and the at least one compressed gas cooler are not controlled or are controlled only via a common control of an overall coolant flow.

13. Method according to any one of Claims 10 to 12, **characterized in that**
- the compressor (130; 900) has at least one rotor for compressing the compressed gas, and at least one compressor gap having a variable gap thickness is formed between the housing and the at least one rotor, and
- the cooling control actuates the at least one housing cooler control means in such a way that the gap thickness remains within a predeterminable range, and/or that the gap thickness follows a predeterminable desired gap thickness.

14. Method according to any one of Claims 10 to 13, **characterized in that** using the cooling control
- a or the gap thickness of the compressor (130; 900) is detected and/or estimated, and
- the at least one housing cooler control means is controlled depending on the detected or estimated gap thickness.

15. Method according to any one of Claims 10 to 14, **characterized in that** using the cooling control
- at least one outlet temperature of the gas that is completely or partially compressed to form compressed gas is detected when said gas exits from the at least one compressor stage (1; 2; 131; 132; 901; 907),
- a default temperature value for the outlet temperature, at which an optimum gap thickness should be expected, is determined, the default temperature value being determined in particular while the operation is proceeding, and
- the at least one housing cooler control means is controlled in such a way that the outlet temperature follows the default temperature value, in particular that the outlet temperature is adjusted to the default temperature value as the desired temperature.

## Revendications

1. Système de compression avec
- un compresseur (130 ; 900), en particulier un compresseur à vis à compression sèche, pour comprimer un gaz pour générer du gaz comprimé, en particulier de l'air comprimé, dans lequel le compresseur présente au moins un étage de compresseur (1 ; 2 ; 131 ; 132 ; 901 ; 907), et
- un système de refroidissement et le système de refroidissement comprenant
- un refroidisseur d'huile (135 ; 5) pour refroidir de l'huile chauffée par le compresseur (130 ; 900),
- au moins un refroidisseur de gaz comprimé (3 ; 4) pour refroidir le gaz totalement ou partiellement comprimé en gaz comprimé, et
- au moins un refroidisseur de boîtier pour refroidir un boîtier ou une partie du boîtier du compresseur (130 ; 900), dans lequel
- le refroidisseur d'huile (135 ; 5), l'au moins un refroidisseur de gaz comprimé (3 ; 4) et l'au moins un refroidisseur de boîtier sont respectivement préparés pour atteindre le refroidissement par un flux de liquide de refroidissement provenant d'un liquide de refroidissement, en particulier de l'eau, et dans lequel le système de compression est **caractérisé en ce que**
- au moins un moyen de commande de refroidisseur de boîtier pour commander individuellement le flux de liquide de refroidissement à travers le refroidisseur de boîtier est prévu pour l'au moins un refroidisseur de boîtier, et
- le système de compression (100 ; 300) présente une commande de refroidissement qui est mise au point pour piloter l'au moins un moyen de commande de refroidisseur de boîtier de telle sorte que l'au moins un flux de liquide de refroidissement est commandé par l'au moins un refroidisseur de boîtier indépendamment du flux de liquide de refroidissement à travers le refroidisseur d'huile (135 ; 5).

2. Système de compression (100 ; 300) selon la revendication 1, **caractérisé en ce que**
- la commande de refroidissement est mise au point pour piloter l'au moins un moyen de commande de refroidisseur de boîtier de telle sorte que l'au moins un flux de liquide de refroidissement est commandé par l'au moins un refroidisseur de boîtier indépendamment de l'au moins un flux de liquide de refroidissement à travers l'au moins un refroidisseur de gaz comprimé (3 ; 4), et/ou que
- la commande de refroidissement est mise au point pour qu'un flux de liquide de refroidissement soit commandé individuellement seulement pour l'au moins un refroidisseur de boîtier, en particulier au moyen du moyen de commande de refroidisseur de boîtier, tandis que des flux de liquide de refroidissement pour le refroidisseur d'huile (135 ; 5) et l'au moins un refroidisseur de gaz comprimé (3 ; 4) ne sont pas commandés ou ne sont commandés que par une commande commune d'un flux de liquide de refroidissement total.

3. Système de compression (100 ; 300) selon la revendication 1 ou 2, **caractérisé en ce que**
- le compresseur présente au moins un rotor pour comprimer le gaz comprimé et au moins une fente de compresseur est réalisée entre le boîtier et l'au moins un rotor ou entre deux rotors, laquelle présente une épaisseur de fente variable, et
- la commande de refroidissement est mise au point pour piloter l'au moins un moyen de commande de refroidisseur de boîtier de telle sorte que l'épaisseur de fente reste dans une plage pouvant être prédéfinie, et/ou que l'épaisseur de fente est adaptée à une épaisseur de fente de consigne pouvant être prédéfinie, et/ou que
- la commande de refroidissement est mise au point pour détecter et/ou estimer une ou l'épaisseur de fente du compresseur (130 ; 900) et
- l'au moins un moyen de commande de refroidisseur de boîtier est commandé en fonction de l'épaisseur de fente détectée ou estimée.

4. Système de compression (100 ; 300) selon l'une quelconque des revendications 1 à 3, **caractérisé en ce que** la commande de refroidissement est mise au point pour que
- au moins une température de sortie du gaz entièrement ou partiellement comprimé en gaz comprimé soit détectée à la sortie de l'au moins un étage de compresseur (1 ; 2 ; 131 ; 132 ; 901 ; 907),
- une valeur de température spécifiée pour la température de sortie est déterminée à laquelle une épaisseur de fente optimale est attendue, dans lequel la valeur de température spécifiée est déterminée en particulier en fonctionnement, et
- l'au moins un moyen de commande de refroidisseur de boîtier est commandé de telle sorte que la température de sortie est adaptée à la valeur de température spécifiée, en particulier que la température de sortie est régulée sur la valeur de température spécifiée comme température de consigne.

5. Système de compression (100 ; 300) selon l'une quelconque des revendications 1 à 4, **caractérisé en ce que** la commande de refroidissement est mise au point pour que
- l'au moins un moyen de commande de refroidisseur de boîtier soit commandé en fonction d'au moins une température de liquide de refroidissement, en particulier
- en fonction d'une température issue de la liste présentant
- une température de liquide de refroidissement détectée sur une sortie de liquide de refroidissement du refroidisseur de boîtier, et
- une température du liquide de refroidissement détectée en aval du refroidisseur de boîtier.

6. Système de compression (100 ; 300) selon l'une quelconque des revendications précédentes, avec
- un compresseur (130 ; 900) pour comprimer un gaz pour générer du gaz comprimé, en particulier de l'air comprimé, et
- un système de refroidissement et le système de refroidissement comprenant
- un refroidisseur d'huile (135 ; 5) pour refroidir de l'huile chauffée par le compresseur (130 ; 900),
- au moins un refroidisseur de gaz comprimé (3 ; 4) pour refroidir le gaz totalement ou partiellement comprimé en gaz comprimé, et
- au moins un refroidisseur de boîtier pour refroidir un boîtier ou une partie du boîtier du compresseur (130 ; 900), dans lequel
- le refroidisseur d'huile (135 ; 5), l'au moins un refroidisseur de gaz comprimé (3 ; 4) et l'au moins un refroidisseur de boîtier sont respectivement préparés pour atteindre le refroidissement par un flux de liquide de refroidissement provenant d'un liquide de refroidissement, en particulier de l'eau, et dans lequel
- le refroidisseur d'huile (135 ; 5) et/ou au moins l'un de l'au moins un refroidisseur de boîtier sont branchés en série par rapport au moins à l'un de l'au moins un refroidisseur de gaz comprimé (3 ; 4) si bien qu'un flux de liquide de refroidissement traverse successivement lesdits refroidisseurs branchés en série.

7. Système de compression (100 ; 300) selon la revendication 6, **caractérisé en ce que** le système de compression (100 ; 300) est conçu de telle sorte que
- le flux de liquide de refroidissement traversant lesdits refroidisseurs branchés en série traverse d'abord le refroidisseur d'huile (135 ; 5), et
- traverse ensuite l'au moins un refroidisseur de gaz comprimé (3 ; 4) si bien que le refroidisseur d'huile (135 ; 5) est traversé par un liquide de refroidissement à une température inférieure à celle de l'au moins un refroidisseur de gaz comprimé (3 ; 4).

8. Système de compression (100 ; 300) selon la revendication 6 ou 7, **caractérisé en ce que**
- un circuit de refroidissement est prévu pour fournir le liquide de refroidissement sur une entrée de circuit de refroidissement et pour récupérer le liquide de refroidissement chauffé par les refroidisseurs sur une sortie de circuit de refroidissement pour refroidir à nouveau le liquide de refroidissement chauffé ou pour l'amener à une autre utilisation, en particulier pour utiliser la chaleur du liquide de refroidissement, et
- le système de compression (100 ; 300) présente une commande de refroidissement qui est mise au point pour commander le système de compression (100 ; 300) de telle sorte que
- le liquide de refroidissement présente une température de 85-95 °C, en particulier de 90 °C à 95 °C sur la sortie du circuit de refroidissement.

9. Système de compression (100 ; 300) selon l'une quelconque des revendications 6 à 8, **caractérisé en ce que**
- plusieurs refroidisseurs de gaz comprimé (3 ; 4) sont prévus et
- le système de compression (100 ; 300) est conçu de telle sorte que le liquide de refroidissement, après avoir traversé le refroidisseur d'huile (135 ; 5), traverse les plusieurs refroidisseurs de gaz comprimé (3 ; 4), qui sont en particulier montés en parallèle, si bien que le liquide de refroidissement traverse lesdits plusieurs refroidisseurs de gaz comprimé en parallèle, et/ou que
- les plusieurs refroidisseurs de gaz comprimé (3 ; 4) sont divisés en plusieurs groupes de refroidisseurs de gaz comprimé, dans lequel
- des refroidisseurs de gaz comprimé (3 ; 4) sont respectivement branchés en parallèle dans respectivement un groupe de refroidisseurs de gaz comprimé, et
- les groupes de refroidisseurs de gaz comprimé sont branchés en série les uns par rapport aux autres, dans lequel en particulier
- un premier et un deuxième refroidisseur de gaz comprimé (3 ; 4) sont branchés en parallèle l'un par rapport à l'autre et
- sont branchés en série par rapport à un troisième et un quatrième refroidisseur de gaz comprimé, qui sont branchés en parallèle l'un par rapport à l'autre.

10. Procédé de commande d'un système de compression (100 ; 300)
- avec un compresseur, en particulier un compresseur à vis, pour comprimer un gaz pour générer du gaz comprimé, en particulier de l'air comprimé, dans lequel le compresseur (130 ; 900) présente au moins un étage de compresseur (1 ; 2 ; 131 ; 132 ; 901 ; 907), et
- avec un système de refroidissement et le système de refroidissement comprenant
- un refroidisseur d'huile (135 ; 5) pour refroidir de l'huile chauffée par le compresseur (130 ; 900),
- au moins un refroidisseur de gaz comprimé pour le gaz totalement ou partiellement comprimé en gaz comprimé, et
- au moins un refroidisseur de boîtier pour refroidir un boîtier ou une partie du boîtier du compresseur (130 ; 900), dans lequel
- le refroidisseur d'huile (135 ; 5), l'au moins un refroidisseur de gaz comprimé et l'au moins un refroidisseur de boîtier sont respectivement préparés pour atteindre le refroidissement par un flux de liquide de refroidissement provenant d'un liquide de refroidissement, en particulier de l'eau, et dans lequel le procédé est **caractérisé en ce que**
- au moins un moyen de commande de refroidisseur de boîtier pour commander individuellement le flux de liquide de refroidissement à travers le refroidisseur de boîtier est prévu pour l'au moins un refroidisseur de boîtier, et
- le système de compression (100 ; 300) présente une commande de refroidissement, et la commande de refroidissement pilote l'au moins un moyen de commande de refroidisseur de boîtier de telle sorte que l'au moins un flux de liquide de refroidissement est commandé par l'au moins un refroidisseur de boîtier indépendamment du flux de liquide de refroidissement à travers le refroidisseur d'huile (135 ; 5).

11. Procédé selon la revendication 10, **caractérisé en ce qu'**un système de compression (100 ; 300) selon l'une quelconque des revendications 1 à 9 est utilisé.

12. Procédé selon la revendication 10 ou 11, **caractérisé en ce que**
- la commande de refroidissement commande un flux de liquide de refroidissement individuellement seulement pour l'au moins un refroidisseur de boîtier, en particulier au moyen du moyen de commande de refroidisseur de boîtier, tandis que des flux de liquide de refroidissement pour le refroidisseur d'huile (135 ; 5) et l'au moins un refroidisseur de gaz comprimé ne sont pas commandés ou sont commandés seulement par une commande commune d'un flux de liquide de refroidissement total.

13. Procédé selon l'une quelconque des revendications 10 à 12, **caractérisé en ce que**
- le compresseur (130 ; 900) présente au moins un rotor pour comprimer le gaz comprimé et au moins une fente de compresseur est réalisée entre le boîtier et l'au moins un rotor, qui présente une épaisseur de fente variable, et
- la commande de refroidissement pilote l'au moins un moyen de commande de refroidisseur de boîtier de telle sorte que l'épaisseur de fente reste à l'intérieur d'une zone pouvant être prédéfinie, et/ou que l'épaisseur de fente est adaptée à une épaisseur de fente de consigne pouvant être prédéfinie.

14. Procédé selon l'une quelconque des revendications 10 à 13, **caractérisé en ce qu'**en utilisant la commande de refroidissement
- une ou l'épaisseur de fente du compresseur (130 ; 900) est détectée et/ou estimée et
- l'au moins un moyen de commande de refroidisseur de boîtier est commandé en fonction de l'épaisseur de fente détectée ou estimée.

15. Procédé selon l'une quelconque des revendications 10 à 14, **caractérisé en ce qu'**en utilisant la commande de refroidissement
- au moins une température de sortie du gaz entièrement ou partiellement comprimé en gaz comprimé soit détectée à la sortie de l'au moins un étage de compresseur (1 ; 2 ; 131 ; 132 ; 901 ; 907),
- une valeur de température spécifiée pour la température de sortie est déterminée à laquelle une épaisseur de fente optimale est attendue, dans lequel la valeur de température spécifiée est déterminée en particulier en fonctionnement, et
- l'au moins un moyen de commande de refroidisseur de boîtier est commandé de telle sorte que la température de sortie est adaptée à la valeur de température spécifiée, en particulier que la température de sortie est régulée sur la valeur de température spécifiée comme température de consigne.
